# EUROPÄISCHE PATENTSCHRIFT

(11) **EP 2 041 923 B1**
(45) Veröffentlichungstag und Bekanntmachung des Hinweises auf die Patenterteilung: **28.12.2011**
(21) Anmeldenummer: 07787479.0
(22) Anmeldetag: 12.07.2007
(51) Int. Cl.: H04L 12/28

(54) **VERFAHREN UND ANORDNUNG ZUR REALISIERUNG VON ZUGANGSNETZWERKEN ZU EINEM ÖFFENTLICHEN NETZWERK**
METHOD AND ARRANGEMENT FOR CREATING NETWORKS FOR ACCESSING A PUBLIC NETWORK
PROCÉDÉ ET SYSTÈME POUR METTRE EN PLACE DES RÉSEAUX D'ACCÈS À UN RÉSEAU PUBLIC

(30) Priorität: 14.07.2006 DE 102006033830
(43) Veröffentlichungstag der Anmeldung: 01.04.2009
(73) Patentinhaber: Cuculus Gmbh, 98693 Ilmenau (DE)
(72) Erfinder: KÄRST, Holger, 98714 Stützerbach (DE); BÖRINGER, René, 99198 Vieselbach (DE); SCHARFE, Gunnar, 07338 Drognitz (DE)
(74) Vertreter: Kruspig, Volkmar
(86) Internationale Anmeldenummer: PCT/EP2007/057208
(87) Internationale Veröffentlichungsnummer: WO 2008/006889

(56) Entgegenhaltungen:
- WO-A-01/56233
- US-A1- 2005 237 985

## Beschreibung

Die vorliegende Erfindung betrifft ein Verfahren und eine Anordnung zur Realisierung von Zugangsnetzwerken zu einem öffentlichen Netzwerk. Mit ihr werden flexible und kosteneffiziente drahtlose Netzwerke in geographisch weitflächigen Gebieten (Städte, Gewerbegebiete) durch eine gemeinsame Verwendung und Verwaltung von vorhandener Netzwerkinfrastruktur gleichberechtigt durch mehrere Verwalter (z.B. Provider) realisiert.

Gegenwärtig existieren unterschiedliche Verfahren und Anordnungen zum Aufbau und zum Betrieb von Zugangsnetzwerken, wie z.B. in der WO 2006/021784 A1. Zugangsnetzwerke verbinden netzwerkfähige Endgeräte (Mobil Telefone, PDA, Laptop, Computer) oder lokale (bspw. private) Netzwerke drahtlos oder drahtgebunden untereinander bzw. mit einem globalen (bspw. öffentlichen) Netzwerk.

Auch US 2005/0237985 A1 beschreibt ein derartiges Verfahren wobei bei der Bildung eines Zugangsnetzwerks die Ressourcen anhand der für jeden Provider festgelegten Rechte zugeteilt werden.

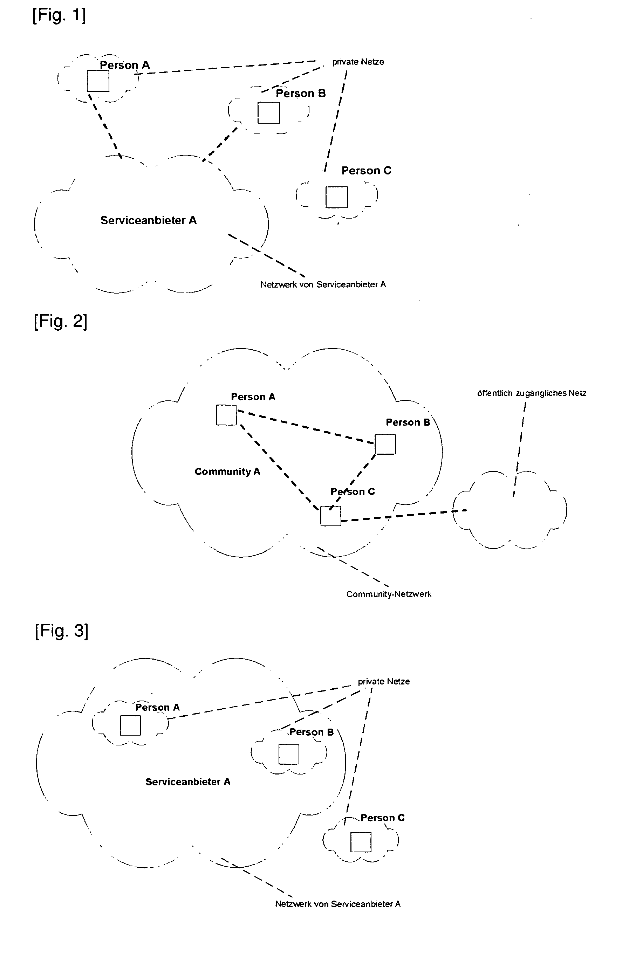

Das klassische Verfahren zum Aufbau und zum Betrieb von Zugangsnetzwerken kann als provider-basiertes Verfahren bezeichnet werden. Ein Provider bietet beispielsweise netzwerkfähigen Endgeräten oder lokalen (bspw. privaten) Netzwerken gegen Gebühr Zugangspunkte (im Verbund: Zugangsnetzwerk) zu einem globalen (bspw. öffentlichen) Netzwerk bzw. Dienste eines globalen (bspw. öffentlichen) Netzwerkes an (Figur 1). Die Zugangspunkte werden durch den Provider selbst aufgebaut und installiert. Die Bereitstellung, das Management und der Support für die Zugangspunkte erfolgt ebenfalls allein durch den Provider. Ein Provider kann damit seinen Kunden ein einheitliches Servicemanagement, Kompatibilität der Zugangspunkte seines Netzwerkes und eine hohe Supportqualität garantieren. Jedoch müssen die verhältnismäßig hohen Investitionskosten, wie z.B. durch den Aufbau und die Installation der Netzwerkinfrastruktur (im Folgenden auch als Infrastruktur bezeichnet), Kauf von Standorten für die einzelnen Zugangspunkte und hohe operative Kosten, wie z.B. durch Standortmiete, Wartungskosten und Energiekosten der Zugangspunkte vollständig durch den Provider allein getragen werden. Deshalb sind provider-basierte Architekturen nur dann wirtschaftlich effizient, wenn sie über einen sehr langen Zeitraum unverändert genutzt werden können.

Um die hohen Investitionskosten und operativen Kosten für Provider eines Zugangsnetzwerkes zu senken und somit die Flexibilität der Provider zu erhöhen besteht ein großes wirtschaftliches Interesse an neuen Verfahren, bei denen eine Infrastruktur mehrfach durch verschiedene Parteien (30, 31) (bspw. mehrere Provider oder eine Privatperson und ein Provider) gemeinsam verwendet wird. Solche Verfahren erlauben es beispielsweise, über eine Infrastruktur mehrere Zugangsnetzwerke unterschiedlicher Provider bereitzustellen oder bereits bestehende Infrastrukturen eines Eigentümers für die Bereitstellung von Zugangsnetzwerken durch Dritte freizugeben, bzw. für die Bereitstellung von Zugangsnetzwerken durch Dritte zu erweitern. Es wurden bereits einige Verfahren und Architekturen entwickelt, die dem Grundansatz der gemeinsamen Nutzung von Infrastruktur durch mehrere Parteien (30, 31) folgen.

Bei allen bisher bekannten Verfahren und Anordnungen existiert immer ein "Supervisor" (im Stand der Technik auch bekannt als Root-Partei) der die vollständige Kontrolle über die gemeinsam verwendete Infrastruktur besitzt. Ein Supervisor besitzt Privilegien, die es ihm erlauben, willkürlich, theoretisch ohne Absprachen mit den Parteien (30, 31) der gemeinsam verwendeten Infrastruktur, Veränderungen an der Infrastruktur durchzuführen, die Auswirkungen auf die Infrastruktur der Parteien (30, 31) haben kann. Dabei können zwei verschiedene Ansätze klassifiziert werden. Im Folgenden werden diese beiden Ansätze als "Manager kontrollierter Ansatz" und "Eigentümer kontrollierter Ansatz" benannt.

Der "Manager kontrollierte Ansatz" umschreibt alle Verfahren und Anordnungen in denen die Kontrolle von Infrastruktur vollständig dem Manager (z.B. Provider) der Infrastruktur unterliegt (Manager-eigene Infrastruktur und auch Infrastruktur die sich im Eigentum Dritter befindet, aber durch den Manager verwaltet wird). Die Kontrolle kann wirtschaftliche Parameter (bspw. Accounting und Billing von Nutzern (30, 31)) und Konfigurationsmöglichkeiten technischer Parameter (bspw. QoS- und Bandbreitenverwaltung, Verwaltung von Netzwerkeinstellungen) umfassen. Eigentümern, die ihre Infrastruktur teilweise oder vollständig zur gemeinsamen Nutzung abtreten, wird die Verwaltungsautorität über ihre Infrastruktur vollständig entzogen und auf den Manager übertragen. Der Manager wird Supervisor. Dem "Manager kontrollierten Ansatz" kann man eindeutig die klassischen provider-basierten Verfahren unterordnen.

Der "Eigentümer kontrollierte Ansatz" umfasst alle Verfahren und Anordnungen, in denen der Eigentümer vollständig die Kontrolle über die eigene Infrastruktur und die eigene, zur Nutzung an Dritte abgetretene Infrastruktur besitzt. Dritte können diese abgetretene Infrastruktur für eigene Zwecke verwenden, haben jedoch keinen Einfluss auf Parametereinstellungen dieser Infrastruktur. Der Eigentümer bleibt Supervisor. Der "Eigentümer kontrollierte Ansatz" ist in community-basierten Verfahren erkennbar.

Community-basierte Verfahren sind noch sehr neu In einer Community verschmelzen die Begriffe Provider und Kunde miteinander. Teilnehmer in der Community bieten eigene Infrastruktur (z.B. Zugangspunkte zu anderen Netzwerken) oder Dienste an (treten als Provider auf), nutzten aber auch Infrastrukturen und Dienste, die von anderen Teilnehmern der Community angeboten werden (sind auch Kunden) (Figur 2). Die Investitionskosten und die operativen Kosten werden gemeinsam durch alle Teilnehmer der Community getragen. Eine Community kann ihren Teilnehmern dadurch eine sehr kostengünstige, oder sogar kostenlose Nutzung der bereitgestellten Infrastruktur, bzw. der bereitgestellten Dienste ermöglichen und ist flexibel bei der Integration neuer Technologien. Bei einem community-basierten Verfahren werden Entscheidungen über Veränderungen demokratisch getroffen, müssen aber nicht zwingend durch die Teilnehmer der Community umgesetzt werden. Die damit verbundene Verteilung der Verantwortung für das Netzwerk hat den Nachteil, dass ein einheitliches, optimiertes Servicemanagement kaum möglich ist. Unterschiedliche Infrastrukturelemente führen zu Inkompatibilitäten. Die Vertrauenswürdigkeit der Infrastruktur und der angebotenen Dienste ist sehr gering. Die Supportqualität hat ein geringes Niveau, oder es wird gar kein Support angeboten.

Da jeder Teilnehmer der Community auch ein Anbieter von Diensten sein kann, beispielsweise ein Anbieter eines öffentlichen Zugangspunktes in das Internet für die Community, kann dieser Teilnehmer rechtlich entsprechend der Gesetzeslage eines Landes als Provider eingeordnet werden. Damit unterliegt dieser Teilnehmer den regulatorischen und gesetzlichen Richtlinien eines Providers. Damit verbunden entsteht für den Teilnehmer, der in Communities meistens eine Privatperson ist, ein erhöhtes Risiko. Beispielsweise könnte er für die Aktivitäten, die durch andere Teilnehmer der Community über seinen bereitgestellten öffentlichen Zugangspunkt ausgeführt wurden verantwortlich gemacht werden. Oder dieser Teilnehmer muss sich den regulatorischen Richtlinien, die für Provider gelten, fügen und beispielsweise Zugriffsschnittstellen für Behörden des Landes zu seinem Zugangspunkt bereitstellen.

Der "Manager kontrollierte Ansatz" und der "Eigentümer kontrollierte Ansatz" setzen voraus, dass zwischen dem Supervisor (Manager oder Eigentümer) und den anderen Parteien der gemeinsam verwendeten Infrastruktur ein absolutes Vertrauensverhältnis besteht. Alle Parteien (30, 31) der gemeinsamen Infrastruktur sind den Entscheidungen des Supervisors vollkommen ausgeliefert und sind auf die Nutzung der Technologien und Dienste eingeschränkt, die durch den Supervisor vorgegeben werden. Dieses für beide Ansätze notwendige Vertrauensverhältnis zwischen dem Supervisor und den Parteien einer gemeinsam verwendeten Infrastruktur ist in der praktischen Anwendung unrealistisch. Deshalb existieren bis heute keine kommerziellen Zugangsnetzwerke, die mit einer gemeinsamen, durch mehrere Parteien verwaltbaren Infrastruktur aufgebaut wurden.

Aufgabe der vorliegenden Erfindung ist es deshalb, einerseits die Vorteile des "Manager kontrollierten Ansatzes" und des "Eigentümer kontrollierten Ansatzes" zu bündeln, andererseits aber auch den bisher erforderlichen Supervisor zur eliminieren, um damit ein Verfahren und eine Anordnung zur Bildung von Zugangsnetzwerken zu einem öffentlichen Netzwerk bereitzustellen, die auf der gemeinsamen Verwaltung von Infrastrukturen beliebiger Eigentümer durch mehrere Parteien basieren. Dabei werden durch diese Anordnung bzw. das Verfahren vor allem auch sicherheitstechnische Randbedingungen beachtet, die es erlauben, bezahlte Dienste vergleichbar zu Diensten heutiger Telekommunikationsnetze über gemeinsam verwendete Infrastrukturen anbieten zu können. Weiterhin soll neben der Aufteilung der Bandbreite eines Breitbandanschlusses (bspw. WAN-Anschluss) einer Infrastruktur auch eine echte Ressourcenaufteilung von Systemressourcen der Infrastruktur, beispielsweise Prozessor, RAM, Cache und weiterer Interfaces möglich werden.

Erfindungsgemäß wird diese Aufgabe verfahrensseitig mit der Lehre des Patentanspruchs 1 und anordnungsseitig mit den Merkmalen des Patentanspruchs 11 gelöst, wobei die Unteransprüche bevorzugte weitere Ausgestaltungen der erfindungsgemäßen Lehre darstellen.

Das erfindungsgemäße Verfahren (im Folgenden Cuckoo-basiertes Verfahren genannt) bündelt einerseits die Vorteile des "Manager kontrollierten Ansatzes" und des "Eigentümer kontrollierten Ansatzes", ohne die jeweiligen Nachteile zu übernehmen und eliminiert andererseits den bisher erforderlichen Supervisor. Durch die Erfindung wird erstmals eine gemeinsame Verwaltung von Infrastruktur durch mehrere Parteien möglich unter spezieller Beachtung sicherheitstechnischer Anforderungen. Zwischen diesen Parteien muss kein direktes Vertrauensverhältnis bestehen. Das Vertrauensverhältnis

entsteht indirekt durch das in dieser Erfindung dargestellte Verfahren, bzw. durch die beschriebene Anordnung.

Eigentümer von Infrastruktur können Nutzungsrechte an den Ressourcen (6, 7) ihrer Infrastruktur (Bandbreiten von Netzwerkschnittstellen, CPU-Nutzung, Speichernutzung, u.A.) anderen Parteien (30, 31) zur Verfügung stellen. Dazu werden die zur Verfügung gestellten Nutzungsrechte in eine unabhängige und flexible Nutzerumgebung gekapselt (4), während die nicht zur Verfügung gestellten Nutzungsrechte in der gekapselten Nutzerumgebung des Eigentümers (3) verbleiben. Die Infrastruktur enthält dann mindestens zwei Nutzerumgebungen (3, 4), auf die nur die jeweilige Partei (30, 31) Zugriff besitzt.

Veränderungen, die die Nutzerumgebungen (3, 4) mehrerer Parteien (30, 31) der gemeinsam verwendeten Infrastruktur betreffen bzw. Ressourcen die nicht direkt einer Nutzerumgebung zugeordnet sind (8), somit also über die Nutzungsrechte einer Nutzerumgebung (3, 4) hinausgehen, können nur durch einen Aushandlungsprozess und nach gemeinsamem Beschluss durch diese Parteien (30, 31) umgesetzt werden. Ein Aushandlungsprozess ist dadurch definiert, dass Parteien (30, 31) innerhalb dieses Prozesses durch Verhandlungsabläufe, die durch die Anordnung bzw. durch das Verfahren bestimmt sind, gemeinsam zu einem Beschluss über Veränderungen von gemeinsam verwendeter Infrastruktur gelangen.

Die erfindungsgemäße Anordnung bzw. das erfindungsgemäße Verfahren enthält dafür eine Partei-neutrale, Maschinen-basierte Einheit - die Basisumgebung (5) - die den gemeinsamen Aushandlungsprozess steuert und die Einhaltung der verhandelten Einstellungen überwacht. Es existiert kein klassischer Supervisor, der die alleinige Kontrolle über die gemeinsam verwendete Infrastruktur besitzt. Jede Partei (30, 31) kann jedoch im Rahmen der abgestimmten Einstellungen ihre abgegrenzte Nutzerumgebung (3, 4) beliebig gestalten, beispielsweise Software installieren, Konfigurationen vornehmen und beliebige Dienste (bspw. Dienste beginnend bei der Bereitstellung von Netzzugängen bis hin zu Anwendungsdiensten wie Telefonie oder IPTV) bereitstellen. Für jede Partei (30, 31) stellt sich ihre logische Nutzerumgebung (3, 4) so dar, als würde damit eine völlig eigenständige physikalische Infrastruktur bereitgestellt, die nur durch diese Partei (30, 31) verwendet wird. Durch die Aufteilung der Nutzungsrechte in unterschiedliche Nutzerumgebungen (3, 4) erlaubt das Cuckoo-basierte Verfahren beispielsweise den Aufbau von Zugangsnetzwerken zu einem öffentlichen Netzwerk mit durch mehrere Parteien (30, 31) gemeinsam verwendeter Infrastruktur, wobei jedes dieser Zugangsnetzwerke die Merkmale eines klassischen Providernetzwerkes bieten kann. Diese Merkmale sind ein einheitliches Servicemanagement, Kompatibilität der Zugangspunkte und eine hohe Supportqualität durch den Serviceanbieter (z.B. Provider) für den Endnutzer.

Mit Hilfe der erfindungsgemäßen Anordnung, bzw. dem erfindungsgemäßen Verfahren können somit verschiedene unabhängige Zugangsnetzwerke parallel über eine Infrastruktur durch mehrere Parteien (30, 31) betrieben werden. Die Investitionskosten und die operativen Kosten verteilen sich zwischen den Parteien (30, 31) (bspw. Eigentümern, Providern). Jeder Eigentümer ist für die Installation und Wartung der eigenen Infrastruktur verantwortlich, jedoch nicht für die Verwaltung der Ressourcen (6, 7, 8) oder Ressourcenanteile (6, 7, 8) von Infrastruktur, deren Nutzungsrechte abgetreten wurden.

Die Vorteile dieser erfindungsgemäßen Lösung lassen sich wie folgt zusammenfassen:
- Der bisher immer vorhandene Supervisor einer Infrastruktur wird eliminiert. Die Parteien (30, 31), die eine Infrastruktur gemeinsam nutzen, sind untereinander gleichberechtigt und nur durch gemeinsame Vereinbarungen können Veränderungen an der Infrastruktur und an der Aufteilung von Nutzungsrechten an Ressourcen (6, 7, 8) oder Ressourcenanteilen (6, 7, 8) von Infrastruktur vorgenommen werden. Dafür steuert eine Partei-neutrale, Maschinen-basierte Einheit (5) den Aushandlungsprozess und überwacht die gemeinsam ausgehandelten Einstellungen für die Infrastruktur.
- Eine echte Zuteilung von Nutzungsrechten an Ressourcen (6, 7, 8) zu verschiedenen Partien (30, 31) der Infrastruktur ist nicht nur für die Bandbreite der drahtlosen, bzw. drahtgebundenen Verbindung möglich (nicht nur eine einfache Partitionierung von Netzwerken in verschiedene virtuelle Netzwerke - VLAN's), sondern unter Anderem möglich für Schnittstellen, Prozessoren, Filesysteme, Cache, RAM und andere Speichermedien (Festplatten, Flashspeicher).
- Jede Partei (30, 31) mit einer eigenen Nutzerumgebung (3, 4) kann ihre Umgebung frei gestalten, beispielsweise beliebige Dienste, Tools und Software installieren, wobei sichergestellt ist, dass die anderen Nutzerumgebungen (3, 4) dabei nicht beeinflusst werden.
- Jede Nutzerumgebung (3, 4) verhält sich, trotz gemeinsam verwendeter Infrastruktur, für eine Partei (30, 31) so, als würde die Infrastruktur durch diese Partei (30, 31) vollkommen eigenständig genutzt werden.
- Die Nutzungsrechte, gekapselt in einer Nutzerumgebung (3, 4) einer Partei (30, 31), spezifizieren die Zugriffsmöglichkeiten auf Ressourcen (6, 7, 8) oder Ressourcenanteile (6, 7, 8) einer gemeinsam durch mehrere Parteien (30, 31) verwendeten Infrastruktur für diese Partei (30, 31). Dabei wird dieser Partei (30, 31) der alleinige Zugriff auf diese Ressourcenanteile (6, 7, 8) garantiert, so dass die Verwendung der Ressourcen (6, 7, 8) für diese Partei (30, 31) eindeutig planbar ist (bspw. können Provider ihren Endkunden somit Garantien für eine Dienstverfügbarkeit geben).
- Verschiedene Zugangsnetzwerke, die durch eine gemeinsam durch mehrere Parteien (30, 31) verwendete Infrastruktur bereitgestellt und durch verschiedene Parteien (30, 31) verwaltet werden, können frei wählbar durch die jeweiligen Parteien (30, 31) mit unterschiedlichen Sicherheitsmechanismen abgesichert werden.
- Durch die Aufteilung und die Absicherung der Nutzungsrechte an Ressourcen (6, 7, 8) von Infrastruktur, gekapselt in Nutzerumgebungen (3, 4), ist ein Zugriff oder die Manipulation von Netzverkehr der jeweils anderen Umgebungen nicht mehr möglich.
- Es kann auf zusätzliche Netzelemente (wie z.B. Router, Server und Switches), die in bisher bekannten Verfahren und Systemen die Aufteilung von Datenströmen in einer gemeinsam verwendeten Infrastruktur zwischen verschiedenen Parteien (30, 31) vornehmen, verzichtet werden.
- Änderungen an Endgeräten die Zugangsnetzwerke nutzen, die auf gemeinsam verwendeter Infrastruktur basieren, sind nicht erforderlich. Provider können Dienste aus ihrem Kernnetz in die Zugangspunkte verlagern und sind damit bedeutend flexibler in der Dienstbereitstellung und Gestaltung ihrer Netzwerke.

Weitere Einzelheiten der Erfindung sind dem nachfolgenden Beschreibungsteil zu entnehmen, in dem die Erfindung unter Bezugnahme auf die beigefügten Zeichnungen näher erläutert wird. Es zeigt:

Figur 1 Prinzip einer Provider-basierten Anordnung (Trennung der Infrastruktur von privaten und öffentlichen Netzwerken mit Verbindungspunkten zwischen den privaten und öffentlichen Netzwerken gemäß dem Stand der Technik)

Figur 2 Prinzip einer Community-basierten Anordnung (Person C bietet der Community einen Zugangspunkt zu einem öffentlichen Netzwerk gemäß dem Stand der Technik)

Figur 3 Prinzip der Cuckoo-basierten Anordnung (Einbindung von privater Infrastruktur in ein öffentliches Netz - Person C hat ihre Ressourcen (6, 7, 8) nicht freigegeben)

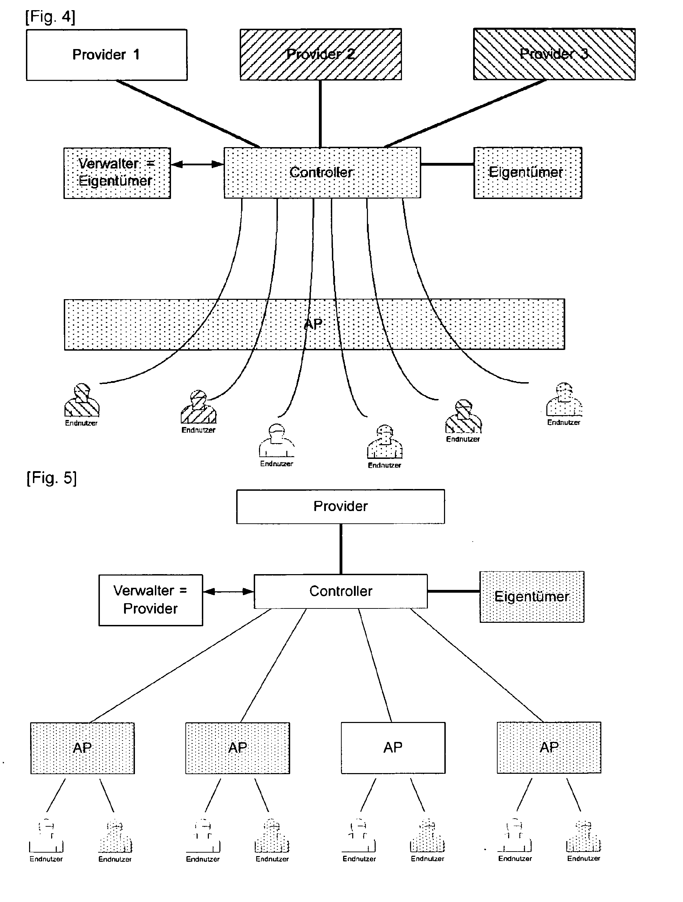

Figur 4 Prinzip eines "Eigentümer kontrollierten Ansatzes" gemäß dem Stand der Technik

Figur 5 Prinzip eines Manager kontrollierten Ansatzes" gemäß dem Stand der Technik

Figur 6 Prinzip einer Cuckoo-basierten Verwaltung

Figur 7 Cuckoo-basierte Anordnung, realisiert als Cuckoo Access Point (CAP) am Beispiel eines öffentlichen WLAN - Netzwerkes eines Serviceanbieters und eines privaten Netzwerkes einer Person

Figur 8 aus dem Stand der Technik bekannter Access Point

Figur 9 Cuckoo Access Point für zwei Parteien (30, 31) A und B

Figur 10 Schnittstellendefinition des CAP am Beispiel von zwei Parteien (30, 31) A und B

Figur 11 Zustandsgesteuertes Management geteilter Ressourcen (6, 7, 8)

Figur 12 Technische Darstellung der Anordnung

Im Folgenden wird zwischen Personen und Serviceanbietern unterschieden.

Der Begriff Person steht als Synonym für eine natürliche oder eine juristische Person (z.B. ein Unternehmen). Eine Person ist klassifiziert durch den Besitz einer Infrastruktur die mindestens einen Zugangspunkt für den Zugang zu einem Netzwerk und eine Anbindung an ein weiteres Netzwerk (bspw. öffentliches Netzwerk, Internet) beinhaltet. Eine Person nutzt die Infrastruktur in erster Linie für die eigenen Zwecke. Eine Person strebt nicht danach, für Dritte zugängliche Dienste anzubieten.

Ein Serviceanbieter nutzt Infrastruktur einer oder mehrerer Personen und bietet eigene Dienste, wie zum Beispiel Telefonie, oder auch Dienste Dritter über diese Infrastruktur an.

Als Parteien (30, 31) werden diejenigen Personen und Serviceanbieter bezeichnet, die gemeinsam Infrastruktur verwenden, basierend auf dem erfindungsgemäßen Verfahren, bzw. der erfindungsgemäßen Anordnung.

Das nachfolgende Ausführungsbeispiel dient allein dem besseren Verständnis der Erfindung und schränkt diese nicht ein.

Immer mehr Menschen und Unternehmen (Personen) besitzen Infrastruktur in Form eines Breitbandzugangs und eines privaten, lokalen, drahtlosen Netzwerks, z.B. WLAN, wobei die vorhandenen Ressourcen (6, 7, 8) des jeweiligen Breitbandzugangs und der privaten, lokalen drahtlosen Netzwerke durch den Eigenbedarf der Personen nicht vollständig ausgenutzt werden.

Andererseits gibt es seitens der Mobilfunkbetreiber und auch anderer Unternehmen (Serviceanbieter) seit einiger Zeit Bestrebungen, ein flächendeckendes funkbasiertes Netzwerk aufzubauen, welches hohe Datenraten und auch neue Dienste ermöglicht (z.B. ein öffentliches WLAN - Netzwerk). Da die Funkzellen von WLAN - basierten drahtlosen Netzwerken klein sind (max. Durchmesser 100 m), sind viele WLAN Zugangspunkte für eine gebietsweise geographische Netzabdeckung, z.B. einer Stadt oder eines Gewerbegebietes, notwendig. Damit verbunden sind hohe Kosten.

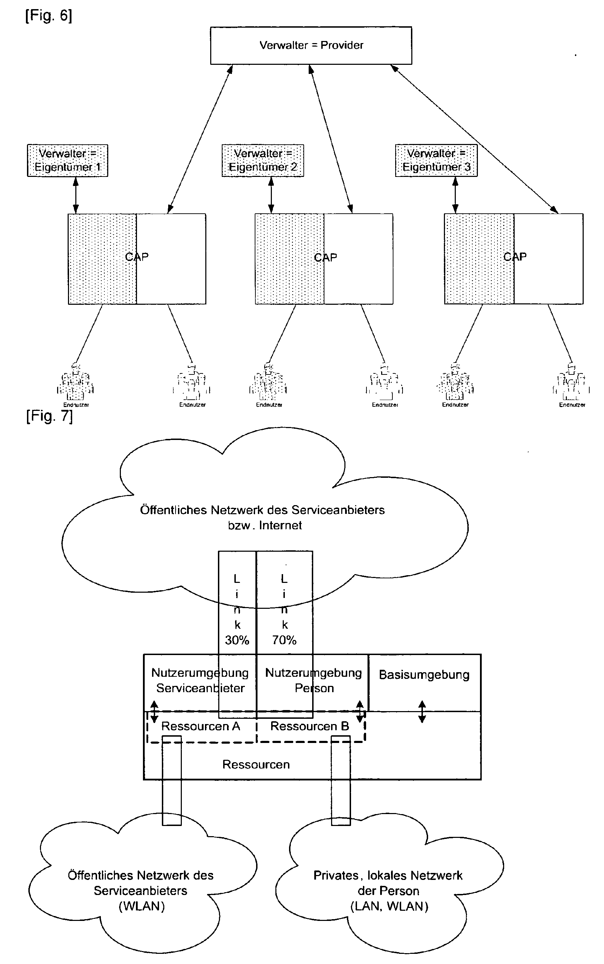

Der Klein der Erfindung liegt in der Verwendung der nicht genutzten Ressourcen (6, 7, 8) der Infrastrukturen von Personen durch Serviceanbieter für die Bereitstellung von Diensten. Dadurch lässt sich in kurzer Zeit mit geringen Installationskosten und mit verteilten operativen Kosten gebietsweise ein flächendeckendes WLAN-Netzwerk erstellen: Die Personen stellen ihre Infrastrukturen gegen Ausgleich den Serviceanbietern zur Verfügung. Die Serviceanbieter können die zur Verfügung gestellten Kapazitäten der Breitbandzugänge bzw. der Ressourcen (6, 7, 8) der Zugangspunkte der Personen nutzen, um beispielsweise ihren Kunden an den Lokalitäten der Zugangspunkte drahtlose Zugänge zum Internet (z.B. öffentliche WLAN-Zellen) oder andere Dienste, beispielsweise Telefonie, Video-Streaming oder Informationsdienste über WLAN anzubieten. Die Zugangspunkte sind damit Teil des privaten, lokalen Netzwerkes der Person und parallel Teil des öffentlichen Netzwerks des Serviceanbieters (Figur 7). Mit dem Cuckoo-basierten Verfahren wird ein neues Verfahren zur Teilung von Netzwerkzugängen (beispielsweise Funkzugang, Breitbandzugang) und Ressourcen (6, 7, 8) (beispielsweise Geräteressourcen eines Netzwerk-Zugangspunktes (Access Point)) zwischen Personen und Serviceanbietern realisiert.

Eine Person besitzt Infrastruktur, bestehend aus mindestens einem Zugang zu einem Netzwerk (z.B. lokales, privates Netzwerk) und einen Zugang über einen Breitbandanschluss zu einem anderen Netzwerk (z.B. öffentliches Netzwerk, Internet). Der Zugang kann unter anderem durch einen Access Point bereitgestellt werden. Der Access Point kann ein oder mehrere Funkmodule zur Bereitstellung von ein oder mehreren drahtlosen Netzwerken enthalten. Diese Funkmodule können drahtlose Netzwerke beliebiger aktuelle und zukünftigen Technologien und Standards unterstützen, beispielsweise WLAN, WIMAX, UMTS, CDMA-2000, WiBRO, GSM, Bluetooth. Der Breitbandanschluss kann durch drahtlose oder drahtgebundene Technologien realisiert sein, beispielsweise durch ADSL, SDSL, VDSL, WIMAX, WLAN, UMTS, WiBRO. Die Person ist für die Bereitstellung des Standortes für die Infrastruktur, für die Stromversorgung der Infrastruktur, für die Netzanbindung der Infrastruktur und für die Pflege und Wartung der Infrastruktur verantwortlich. Wenn die Person die eigene Infrastruktur selbst nur teilweise nutzt, dann kann die Person diese ungenutzten Anteile der eigenen Infrastruktur einem oder mehreren Serviceanbietern ihrer Wahl zur freien Verwendung zur Verfügung stellen, wobei die Attraktivität der von einer Person angebotenen Infrastruktur abhängig ist von dem Infrastrukturangebot im näheren geographischen Umfeld, der Nachfrage nach Infrastruktur und von strategischen und taktischen Entscheidungen eines Serviceanbieters. Die Person kann die nicht abgetretenen Anteile der Infrastruktur für eigene Zwecke zur alleinigen Verwendung frei nutzen. Die alleinige Nutzung des nicht abgetretenen Anteils der Infrastruktur wird der Person garantiert.

Die Person handelt mit einem oder auch mehreren potentiellen Serviceanbietern ein Nutzungsrecht ihrer eigenen, für die potentiellen Serviceanbieter abzutretenden Infrastruktur aus. Die Nutzungsrechte können beispielsweise in Form von Service Level Agreements (SLA) festgehalten werden. Die Person tritt mit Vertragsabschluss einen ausgehandelten Anteil der Infrastruktur an den oder die Serviceanbieter ab. Wenn es die rechtlichen Rahmenbedingungen zulassen (vertragliche Vereinbarungen zwischen Person und Serviceanbieter), kann die Person die abgetretenen Infrastrukturanteile wieder zurücknehmen, um sie beispielsweise für eigene Zwecke zu verwenden oder an andere Serviceanbieter abzutreten.

Die Person bekommt für die abgetretenen Nutzungsrechte einen Ausgleich von dem Serviceanbieter, bzw. den Serviceanbietern. Dieser Ausgleich kann unterschiedlicher Art sein, beispielsweise eine laufende Verhütung (Preis pro Minute der Nutzung oder Preis pro übertragener Informationsmenge (bspw. Netzwerkpakete) über die abgetretene Infrastruktur) oder eine einmalige Verhütung (Infrastruktur wird teilweise oder vollständig durch einen Serviceanbieter finanziert oder kostengünstige bzw. kostenlose Nutzung des Netzwerkes des Serviceanbieters wird angeboten, oder in Form einer Grundgebühr).

Serviceanbieter können von Personen angebotene Infrastruktur flexibel zur eigenen Verwendung auswählen. Netzwerke von Serviceanbietern können damit sehr schnell und effizient durch einfache Integration und auch wieder Entfernung von Infrastrukturanteilen verschiedener Personen an Umgebungsveränderungen angepasst werden. Umgebungsveränderungen beschreiben dabei alle netzwerkexternen und netzwerkinternen Veränderungen, die Auswirkungen auf das Netzwerk haben, beispielsweise die Funktion oder die Auslastung des Netzwerkes (bspw. durch Änderungen des Nutzerverhaltens von Endkunden oder durch Strategiewechsel der Serviceanbieter). Ein Serviceanbieter, dem ein Nutzungsrecht eines Anteils einer Infrastruktur zugesprochen wurde bzw. das durch ihn ausgewählt wurde (vertragliche Aushandlung mit der Person, die Eigentümer der Infrastruktur ist), kann diesen Infrastrukturanteil für eigene Zwecke oder Zwecke Dritter zur alleinigen Verwendung frei nutzen. Die alleinige Verwendung dieses Infrastrukturanteils wird dem Serviceanbieter garantiert.

Die Flexibilität des Netzaufbaus aus Infrastrukturanteilen verschiedener Personen und die Möglichkeiten der freien Gestaltbarkeit der Infrastrukturanteile senkt einerseits die Kosten für den Aufbau und Betrieb von Netzwerken und erhöht andererseits die Innovationskraft der Serviceanbieter. Die Infrastrukturanteile einer oder mehrerer Personen, die an einen Serviceanbieter abgetreten wurden, werden durch den Serviceanbieter aus einer Hand verwaltet. Der Serviceanbieter ist der zentrale Ansprechpartner gegenüber seinen Endkunden und übernimmt vollständig die Supportfunktionen für die von ihm verwalteten Infrastrukturanteile. Damit kann den Endkunden (Kunden der Serviceprovider) eine Garantie über die Verfügbarkeit von Diensten (bspw. Internetzugriff, Telefonie) und ein zentraler Ansprechpartner für den Support gegeben werden.

Keiner Partei (30, 31) (Person, Serviceanbieter) ist es jedoch erlaubt (vertraglich festgehalten) und auch nicht möglich (technische Trennung) auf die Daten (Accounting-, Authentifikations-, Konfigurationsdaten, oder andere Daten), Dateneinheiten (Dateien und andere Daten enthaltende Objekte oder Container) und Infrastrukturanteile anderer Parteien (30, 31) einer gemeinsam genutzten Infrastruktur zuzugreifen. Das Cuckoo-basierte Verfahren bietet die notwendigen Sicherheitsmechanismen zur Absicherung der Daten, Dateneinheiten und der Anteile der Infrastruktur zwischen Serviceanbietern und Personen durch die Einkapselung der Daten und Dateneinheiten und der Zugriffsrechte auf Infrastrukturanteile in den entsprechenden Nutzerumgebungen (3,4). Die Parteien (30, 31) sind untereinander gleichberechtigt. Nur durch gemeinsame Vereinbarungen können Vertragsbedingungen geändert bzw. Verträge aufgelöst werden. Vertragsbrüche können von allen Parteien (30, 31) durch Überwachungs- und Signalisierungsmechanismen der Anordnung erkannt, mitverfolgt und somit rechtlich geltend gemacht werden. Die technische Realisierung des Cuckoo-basierten Verfahrens garantiert diese Gleichberechtigung, und unterbindet einseitige Verletzung, beispielsweise einseitige Veränderungen an der Infrastruktur, oder einseitige Veränderungen der eingestellten Verteilung von Anteilen einer Infrastruktur. Es gibt keinen "Supervisor ", der allein diese gemeinsam verhandelten Beschränkungen/ Verteilungen einer gemeinsam verwendeten Infrastruktur aufheben oder verändern kann.

Das Cuckoo-basierte Verfahren lässt sich unter Einhaltung der rechtlichen Rahmenbedingungen für öffentliche Telekommunikationsnetzwerke und der Sicherheitsanforderungen der Personen und Serviceanbieter einfach in bestehende Netzwerke integrieren. Das Cuckoo-basierte Verfahren stellt eine ausreichende Ventrauenswürdigkeit bereit, um die gemeinsame Nutzung von Infrastrukturen durch verschiedene Parteien (30, 31) in der Praxis zu etablieren. Mit diesem Verfahren wird die exklusive Nutzung der jeweiligen Infrastrukturanteile aller Parteien (30, 31) vertraglich genau definiert und technisch garantiert. Das Cuckoo-basierte Verfahren ermöglicht es, neue Märkte zu erschließen, bestehende Märkte neu zu gestalten und die Einführung von neuen Services und Technologien erheblich zu beschleunigen.

Im Folgenden wird eine mögliche technische Realisierung der Cuckoo-basierten Anordnung in Form eines Cuckoo Access Points (CAP) detailliert beschrieben. Die Beschreibung dieser Realisierungsmöglichkeit dient allein dem besseren Verständnis der Erfindung und schränkt diese nicht ein. Im Besonderen sind auch andere erfindungsgemäße Realisierungsmöglichkeiten denkbar, die allgemein durch die Erfindung eingeschlossen sind.

Mit den Ressourcen (6, 7, 8) eines CAP sind im Folgenden die Hard- und Softwarekomponenten eines CAP gemeint. Ein CAP besitzt dabei mindestens folgende Ressourcen (6, 7, 8):
- Unterstützung eines oder mehrerer drahtgebundener oder drahtloser Netzwerkschnittstellen (ADSL, SDLS, VDSL, WLAN, WIMAX, WiBRO, Bluetooth, UMTS, o.A.) zu einem öffentlichen Netzwerk und/oder zu einem privaten Netzwerk
- Unterstützung eines oder mehrerer drahtloser Netzwerkschnittstellen gleicher oder unterschiedlicher drahtloser Technologie (WLAN, WIMAX, UMTS, GSM, WiBRO), mit der Möglichkeit eines dynamischen Managements der Funkkonfiguration zur Bereitstellung eines oder mehrerer Zugangsnetzwerke(s)
- Basishardware (Prozessor, Speicher, Input-Output-Interface)
- grundlegende soft- und hardware-basierte Einheiten zur technischen Umsetzung des beschriebenen Verfahrens (Basisumgebung (5), Nutzerumgebung (3, 4)), wobei jede dieser Einheiten aus verschiedenen Modulen besteht (72, 73, 74, 75, 76, 77, 79, 80, 81, 82).
- Betriebssystem
- Dateisystem

Ein CAP kann als Einheit in einem Gerät, aber auch verteilt über mehrere Geräte realisiert sein. Ein Gerät beschreibt dabei eine in sich geschlossene Funktionseinheit mit abgegrenzten Ressourcen (6, 7, 8) und definierten Schnittstellen.

Die Ressourcen (6, 7, 8) eines CAP können durch eine Partei (30, 31) vollständig oder durch mehrere Parteien (30, 31) partiell und unabhängig von einander verwendet werden, um mit diesen Ressourcen (6, 7, 8) beispielsweise einen Zugangspunkt zu einem Netzwerk zu betreiben.

Für die Gesamtheit der Nutzungsrechte an Ressourcen (6, 7, 8) oder Ressourcenanteilen (6, 7, 8), Daten (Accounting-, Authentifikations-, Konfigurationsdaten, oder andere Daten) und Dateneinheiten (Dateien und andere Daten enthaltende Objekte oder Container) eines CAP wird der Begriff Umgebung verwendet.

Der CAP unterstützt erweitert Funktionen, die es erlauben, dass ein oder mehrere Parteien (30, 31) die Ressourcen (6, 7, 8) des CAP unabhängig von einander, gemäß vertraglich festgelegten Nutzungsrechten, beliebig, teilweise oder vollständig verwenden können. Zwischen Parteien (30, 31) vereinbarte Nutzungsrechte, beispielsweise in Form von Service Level Agreements, werden technisch in ein definiertes Regelwerk (78), beispielsweise in Policies abgebildet, das den Zugriff auf die Ressourcen (6, 7, 8) des CAP für alle Parteien (30, 31) des CAP eindeutig festlegt. Werden die Ressourcen (6, 7, 8) eines CAP durch mehrere Parteien (30, 31) verwendet, so können die Ressourcen (6, 7, 8) softwarebasiert (beispielsweise durch Virtualisierung der Ressourcen (6, 7, 8)), hardwarebasiert (beispielsweise sind gleiche Hardwarekomponenten mehrfach vorhanden) oder durch eine Kombination daraus zwischen den Parteien (30, 31) aufgeteilt werden. Die Nutzungsrechte an Ressourcen (6, 7, 8), die Daten, Dateneinheiten und Funktionen einer Partei (30, 31) werden für Parteien (30, 31) in Nutzerumgebungen (3, 4) gekapselt. Die in einer Nutzerumgebung (3, 4) gekapselten Nutzungsrechte garantieren der jeweiligen Partei (30,31) den alleinigen Zugriff auf die durch die Nutzungsrechte spezifizierten Ressourcen (6, 7) oder Ressourcenanteile (6, 7). Technisch ist es abgesichert, dass keine Partei (30, 31) auf die Ressourcen (6, 7, 8), Daten und Dateneinheiten einer anderen Partei (30, 31) des CAP zugreifen bzw. in die Umgebungen anderer Parteien (30, 31) eindringen kann.

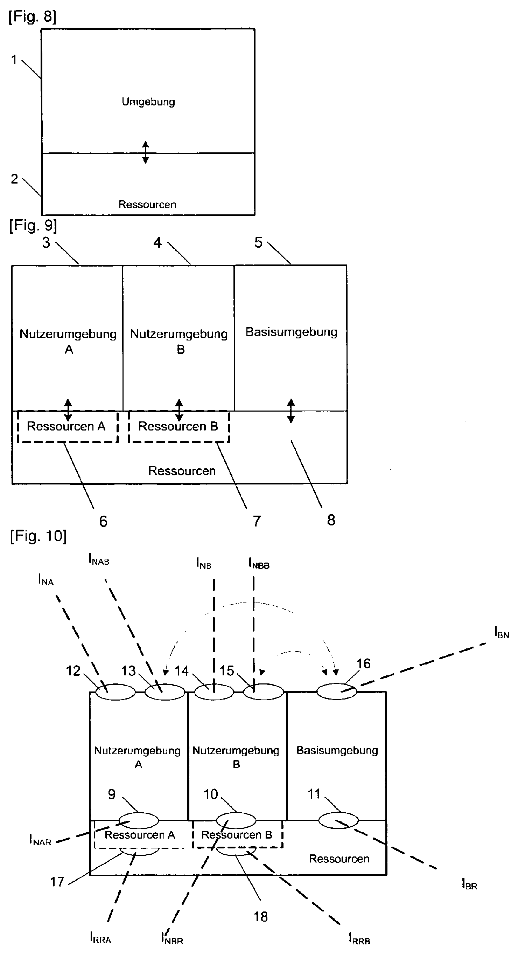

Die bisher bekannten Access Points verfügen über eine Umgebung (1), die es genau einer Partei erlaubt, Konfigurationen am Access Point vorzunehmen und die Ressourcen (2) des Access Points zu kontrollieren (Figur 8). Diese Partei ist somit Supervisor des Access Points. Der erfindungsgemäße Cuckoo Access Point erweitert dieses Prinzip durch eine Aufteilbarkeit der Umgebung auf mehrere Parteien (Figur 9) und die Eliminierung des Supervisors. Die Aufteilung ist dabei nicht nur auf die Bandbreite des drahtlosen (bspw. durch Bereitstellung von mehreren virtuellen drahtlosen Netzen durch die Ausstrahlung mehrere ESSIDs) bzw. des drahtgebundenen Netzanschlusses (durch VLAN-Technologien und QoS-Mechanismen) beschränkt, sondern es können auch die anderen Ressourcen (6, 7, 8), bspw. Schnittstellen, Speichermenge und CPU-Kapazitäten, aufgeteilt werden. Grundsätzlich wird die Umgebung (1) der bisher bekannten Access Points im Cuckoo Access Point in eine Basisumgebung (5) und mindestens eine oder auch mehrere Nutzerumgebungen (3, 4) untergliedert. Alle Funktionen zur Entscheidungsfindung und Verwaltung von Ressourcen (6, 7, 8), die alle Nutzerumgebungen (3, 4) eines CAP betreffen, sind in der Basisumgebung (5) gekapselt.

Die Basisumgebung (5) enthält dabei mindestens ein Regelwerk (78), ein Sicherheitsmodul (79), ein Kommunikationsmodul (76) und ein Kontrollmodul (77).

Das Regelwerk (78) enthält die vertraglich ausgehandelten Restriktionen (bspw. Service Level Agreements) in Form einer technischen Spezifikation. Eine technische Spezifikation kann dabei auf unterschiedliche Weise definiert sein, bspw. durch Policies oder durch Konfigurationsvariablen deren Attribute dedizierte Zugriffsrechte auf Ressourcen (6, 7, 8) definieren.

Das Kommunikationsmodul (76) verwaltet die Schnittstellen (16) zwischen der Basisumgebung (5) und Nutzerumgebungen (3,4), bzw. die Schnittstellen (11) zwischen der Basisumgebung (5) und Ressourcen (6, 7, 8). Der Kommunikationsweg, wird dabei durch das Sicherheitsmodul (79) vor unberechtigtem Zugriff geschützt. Dazu unterstützt das Sicherheitsmodul (79) Identifizierungs-, Authentifizierungs- und Autorisierungsmechanismen sowie Verschlüsselungstechnologien. Das Sicherheitsmodul (79) enthält weitere grundsätzliche Sicherheitsfunktionen sodass die Basisumgebung (5) unter Anderem in der Lage ist, Identifikationsmöglichkeiten (bspw. Zertifikate, Schlüssel oder Ähnliches) zu erstellen, zu löschen, an Parteien (30, 31) und Nutzerumgebungen (3, 4) zu binden bzw. wieder zu entkoppeln, gegebenenfalls zu verifizieren und zur Authentifizierung und Autorisierung zu verwenden. Identifikationsmöglichkeiten können Partei-spezifische Informationen enthalten, beispielsweise Angaben über die für eine Partei (30, 31) ausgehandelten Nutzungsrechte an Ressourcen (6, 7, 8). Die Sicherheitsfunktionen sind dabei essentieller Bestandteil des Prozesses der Aufteilung von Zugriffsrechten an Ressourcen (6, 7, 8) oder Ressourcenanteilen (6, 7, 8) auf Parteien (30, 31) und der Absicherung von Nutzerumgebungen (3, 4) und der Basisumgebung (5).

Das Kontrollmodul (77) ersetzt zusammen mit dem Regelwerk (78) den bisher in solchen Systemen immer erforderlichen Supervisor.

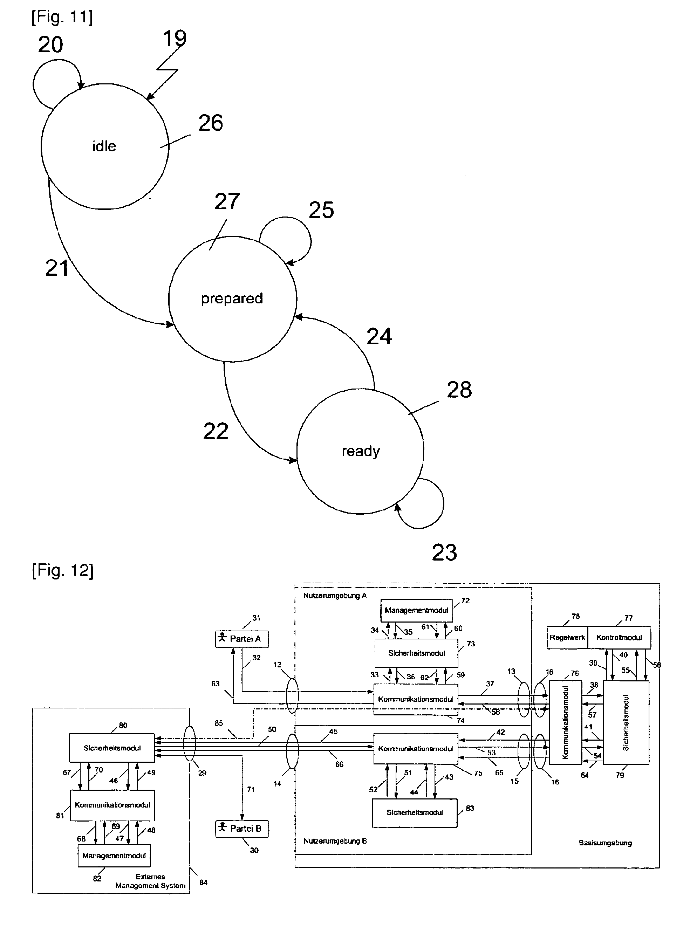

Das Kontrollmodul (77) überwacht die Einhaltung der Spezifikationen des Regelwerkes (78). Es bestimmt den Aushandlungsprozess durch einen zustandsgesteuerten Prozessablauf (Figur 11). Gemäß dem Ergebnis von Aushandlungen adaptiert das Kontrollmodul (77) das Regelwerk (78). Somit werden neue Restriktionen nicht durch einen Supervisor festgelegt, sondern sind durch einen technischen Prozess zwischen den Parteien (30, 31) aushandelbar. Zudem setzt das Kontrollmodul (77) die beschlossenen Veränderungen in der Infrastruktur um. Es generiert, verwaltet und löscht Nutzerumgebungen (3,4) und konfiguriert die Ressourcen (6, 7, 8) die geteilt, parallel von mehreren Parteien (30, 31) verwendet werden. Somit ersetzt das Kontrollmodul (77) den Supervisor vollständig durch eine technische Komponente, die sich vollkommen neutral gegenüber den Parteien (30, 31) der geteilt verwendeten Infrastruktur verhält und deren gemeinschaftlich ausgehandelten Restriktionen mit dem Regelwerk (78) umsetzt. Das Kontrollmodul (77) selbst unterliegt nicht der übergeordneten Administration durch einen Supervisor. Dessen Verhalten wird vielmehr durch alle Parteien (30, 31) des CAP gemeinsam und gleichberechtigt bestimmt.

Zusammengefasst enthält die Basisumgebung (5) fest definierte Grundfunktionen und Schnittstellen (11, 16) für den Zugriff auf Ressourcen (6, 7, 8) des CAP. Wobei Grundfunktionen in Modulen (zumindest Sicherheitsmodul (79), Kontrollmodul (77), Kommunikationsmodul (76), Regelwerk (78)) gekapselt sein können und mindestens folgendes realisieren:
- Funktionen die einen bisher immer notwendigen Supervisor ersetzen und damit eine gleichberechtigte, gemeinschaftliche Verwaltung und Nutzung von Infrastruktur erlauben, u.A.
   1. zustandsgesteuerter Prozessablauf (Figur 11) als technische Einheit zur Realisierung des neutralen Aushandlungsprozesses zur gleichberechtigten und gemeinschaftlichen Aufteilung von Ressourcen (6, 7, 8) zwischen mehreren Parteien (30, 31), die parallel eine Infrastruktur verwalten, bzw. nutzen.
   2. ein adaptives Regelwerk (78), in Form einer technischen Spezifikation durch bspw. Policies oder Konfigurationsvariablen zur Umsetzung von ausgehandelten Service Level Agreements
   3. Prozesslogik zur Generierung, Verwaltung, Löschung von Nutzerumgebungen (3, 4), gemäß den Spezifikationen des Regelwerkes (78)
   4. Überwachungslogik zur Überwachung der Einhaltung von Spezifikationen des Regelwerkes (78), insbesondere Überwachung des Zugriffes auf Ressourcen (6, 7, 8) des CAP
- Sicherheitsfunktionen (bspw. Identifikations-, Authentifizierungs-, Autorisierungsfunktionen, Integritätsüberwachung, Verschlüsselung, Fehlererkennung, Fehlerreaktion, u.A.)
- Accounting
- übliche Betriebssystemfunktionen wie beispielsweise
   1. Verwaltungsfunktionen für Dateisysteme
   2. QoS-Funktionen (bspw. Überwachung von Latenzzeiten des Datenverkehrs)
   3. Optimierungsfunktionen (bspw. Lastverteilungsfunktionen)
   4. Netzwerkdienste (DHCP-, HTTP-, FTP-, TFTP- Server oder Client)
   5. Systemfunktionen (bspw. Bereitstellung von Schnittstellen (Treibern) für den Zugriff auf Hardwareressourcen des CAP)

Die Basisumgebung (5) kann durch die Parteien (30, 31), nach herstellerseitiger Auslieferung des CAP funktionell nicht mehr verändert, gelöscht, ausgetauscht oder erweitert werden. Damit wird die Neutralität der Basisumgebung (5) (speziell des Kontrollmoduls (77) verbunden mit dem Regelwerk (78)) sichergestellt. Der direkte Zugriff auf die Grundfunktionen der Basisumgebung (5) ist nicht möglich, sondern nur eingeschränkt über definierte Schnittstellen (13, 15, 16), die zwischen der Basisumgebung (5) und den Nutzerumgebung(en) existieren (Figur 10) und durch das Kommunikationsmodul (76), das Kontrollmodul (77) und das Regelwerk (78) festgelegt sind. Grundsätzlich sind die Grundfunktionen nur aus Nutzerumgebungen (3, 4) heraus aufrufbar. Es existieren keine Schnittstellen von der Basisumgebung (5) direkt zu Kommunikationspunkten außerhalb des CAP, bzw. von Kommunikationspunkten außerhalb des CAP zur Basisumgebung (5). Damit wird verhindert, dass die Basisumgebung (5) durch externe Störfaktoren in irgendeiner Weise beeinflusst, bzw. durch externe Angreifer kompromittiert werden kann.

Grundfunktionen sind generell unterscheidbar in konfigurierbare Grundfunktionen und fixe Grundfunktionen. Konfigurierbare Grundfunktionen sind durch Veränderungen von funktionsspezifischen Parametern über definierte Schnittstellen anpassbar. Fixe Grundfunktionen besitzen keine veränderbaren Parameter. Eine Basisumgebung (5) kann konfigurierbare oder fixe Grundfunktionen oder eine Kombination aus konfigurierbaren und fixen Grundkonfigurationen enthalten. Grundkonfigurationen können softwaretechnisch, hardwaretechnisch oder durch eine Kombination aus Software und Hardware realisiert sein.

Verschiedene Informationen über die Ressourcenverwendung können für jede Partei (30, 31) durch die Basisumgebung (5) protokolliert werden (Accounting). Entsprechend definierter Rechte im Regelwerk (78) können Parteien (30, 31) die Protokolle über die gesammelten Informationen abrufen, jedoch keine Veränderungen an den Protokollen vornehmen. Die Protokolle können dazu verwendet werden mögliche Abrechnungsmechanismen zu unterstützen, bzw. die Abrechnung der Nutzung der Ressourcen (6, 7, 8) für alle Parteien (30, 31) transparent zu gestalten.

Eine Nutzerumgebung (3, 4) grenzt die vertraglich ausgehandelten Nutzungsrechte an Ressourcen (6, 7, 8) des CAP und die Daten, sowie Dateneinheiten und Funktionen einer Partei (30, 31) von anderen Nutzerumgebungen (3, 4) ab. Für jede Partei (30, 31) wird auf dem CAP eine Nutzerumgebung (3, 4) eingerichtet (Figur 9). Die Nutzerumgebungen (3, 4) sind untereinander vollständig entkoppelt. Es existieren keine Schnittstellen zwischen den einzelnen Nutzerumgebungen (3, 4). Damit wird verhindert, dass eine Partei (30,31) in die Nutzerumgebungen (3, 4) anderer Parteien (30, 31) eindringen oder Nutzungsrechte an Ressourcen (6, 7, 8) oder Ressourcenanteilen von Nutzerumgebungen (3,4) anderer Parteien (30, 31) verwenden kann. Der Zugriff auf Nutzerumgebungen (3, 4) wird durch das Regelwerk (78) der Basisumgebung (5) eindeutig spezifiziert und über die Sicherheitsfunktionen der Nutzerumgebung (3, 4) abgesichert und überwacht. Somit kann nur eine durch die Sicherheitsfunktionen überprüfte Partei (30,31) auf eine Nutzerumgebung (3, 4) zugreifen. Einer Partei (30, 31) wird durch das Kontrollmodul (77) und das Regelwerk (78) die alleinige Verwendung der durch die Nutzungsrechte spezifizierten Ressourcen (6, 7, 8) und durch das Sicherheitsmodul die Absicherung der Daten und Dateneinheiten ihrer Nutzerumgebung (3, 4) garantiert. Für jede Partei (30, 31) erscheint die jeweilige Nutzerumgebung (3, 4) als vollkommen eigenständig verwendbar. Die Partei (30, 31) besitzt die vollständigen Verwaltungsrechte für ihre Nutzerumgebung (3, 4).

Sie kann beispielsweise Software installieren, beliebige Dienste bereitstellen und Konfigurationen vornehmen. Die Gestaltbarkeit der Nutzerumgebung (3, 4) unterliegt ausschließlich den Restriktionen die für die Partei (30, 31) durch das Regelwerk (78) der Basisumgebung (5) vorgegeben und durch das Kontrollmodul (77) der Basisumgebung (5) überwacht werden. Diese freie Gestaltbarkeit der Nutzerumgebung (3, 4) ist ein wirtschaftlicher Vorteil gegenüber aktuell bekannten Systemen. Beispielsweise können Serviceanbieter die Dienste aus ihrem Kernnetz in die Zugangspunkte verlagern und sind damit bedeutend flexibler in der Dienstbereitstellung und Gestaltbarkeit ihrer Netzwerke. Die Nutzerumgebungen (3, 4) eines CAP können beispielsweise für die Bereitstellung von unterschiedlichen Zugangsnetzwerken und als Zugangspunkte zu Netzwerken verschiedener Serviceanbieter verwendet werden. Jede Partei (30, 31) kann dabei durch die freie Gestaltbarkeit ihrer Nutzerumgebung (3, 4) die Sicherheitsmechanismen des Zugangsnetzwerkes an die eigenen Sicherheitsmechanismen anpassen. Dabei ist die Partei (30, 31) vollkommen unabhängig von den Sicherheitsmechanismen, die andere Parteien (30, 31) in ihren, über den gleichen CAP bereitgestellten Zugangsnetzwerken verwenden. Der Netzverkehr der unterschiedlichen bereitgestellten Zugangsnetzwerke ist untereinander durch die Nutzerumgebung (3, 4) entkoppelt und gegen unautorisierten Zugriff (Belauschen, Verfälschen von Informationen) abgesichert.

Die Nutzerumgebungen (3, 4) der anderen Parteien (30,31) sind für die jeweilige Partei (30, 31) nicht ersichtlich. Die für die jeweilige Partei (30, 31) verfügbaren Ressourcen (6, 7) sind durch ihre eindeutig definierten Nutzungsrechte an Ressourcen (6, 7) oder Ressourcenanteilen (6, 7) und die Garantie der alleinigen Verwendung dieser Ressourcen (6, 7) oder Ressourcenanteile (6, 7) genau einschätzbar. Die Partei (30, 31) kann die Verwendung dieser Ressourcen (6,7) planen.

Die eindeutige Einschätzbarkeit und Planbarkeit von Ressourcen (6, 7, 8), trotz einer gemeinsamen Verwendung eines CAP durch mehrere Partien (30, 31), bedeutet einen weiteren enormen wirtschaftlichen Vorteil gegenüber bisher bekannten Systemen. Beispielsweise ist für Serviceanbieter die Planbarkeit von Ressourcen (6, 7, 8) enorm wichtig, um ihr Dienstangebot kalkulieren zu können. Serviceanbieter sind somit in der Lage, ihren Kunden Garantien für Dienstangebote geben zu können.

Eine Nutzerumgebung (3, 4) enthält dabei mindestens ein Kommunikationsmodul (74, 75, 81), ein Sicherheitsmodul (73, 80, 83), und ein Managementmodul (72, 82).

Das Managementmodul (72, 82) verwaltet die Interaktionen zwischen der Nutzerumgebung (3, 4) und der Basisumgebung (5), sowie zwischen der Nutzerumgebung (3, 4) und der entsprechenden Partei (30, 31). Über das Managementmodul (72,82) können beispielsweise Veränderungswünsche an Einstellungen der Nutzerumgebung (3, 4) durch die Partei (30, 31) entgegengenommen und umgesetzt werden. Dabei interagiert das Managementmodul (72, 82) mit dem Kontrollmodul (77) der Basisumgebung (5), falls die in der Nutzerumgelung (3, 4) gekapselten Nutzungsrechte für die Umsetzung der Veränderungswünsche nicht ausreichen und deshalb gegebenenfalls Aushandlungsprozesse mit anderen Parteien (30, 31) des CAP erforderlich sind bevor die Veränderungswünsche umgesetzt werden können. Andererseits informiert das Managementmodul (72, 82) die Partei (30, 31), falls Veränderungswünsche anderer Parteien (30, 31) des CAP die Zustimmung der Partei (30, 31) erfordern.

Das Managementmodul (72) kann dabei innerhalb der Nutzerumgebung (3, 4) sein, oder das Managementmodul (82) kann auch außerhalb des CAP in einem eigenständigen Managementsystem (84) integriert sein. Ist dass Managmentmodul (82) außerhalb des CAP, in einem Managementsystem (84) integriert, dann besitzt das Managementsystem (84) ebenfalls ein Kommunikationsmodul (81) und ein Sicherheitsmodul (80).

Das Kommunikationsmodul (74, 75, 81), bildet die Schnittstellen zwischen der Nutzerumgebung (3, 4) und der Basisumgebung (5) und zwischen der Nutzerumgebung (3, 4) und ihrer Partei (30, 31), bzw. zum Managementmodul (82) in einem externen Managementsystem (84) der Partei (30,31).

Der Kommunikationsweg, wird dabei durch das Sicherheitsmodul (73, 80, 83) vor unberechtigtem Zugriff geschützt. Dazu unterstützt das Sicherheitsmodul (73, 80, 83) Identifizierungs-, Authentitizierungs- und Autorisierungsmechanismen sowie Verschlüsselungstechnologien. Identifikationsmöglichkeiten können Partei (30, 31)-spezifische Informationen enthalten, beispielsweise Angaben über die für eine Partei (30, 31) ausgehandelten Nutzungsrechte an Ressourcen (6, 7, 8). Die Sicherheitsfunktionen sind dabei essentieller Bestandteil des Prozesses der Aufteilung von Zugriffsrechten an Ressourcen (6, 7, 8) oder Ressourcenanteilen auf Parteien (30, 31) und der Absicherung von Nutzerumgebungen (3, 4) und der Basisumgebung (5).

Für den Zugriff auf die Basisumgebung (5) und die Nutzerumgebung(en) (3, 4) eines CAP bzw. für den Zugriff auf Ressourcen (6, 7, 8) eines CAP werden verschiedene Schnittstellen (Figur 10) benötigt. Die Schnittstellen sind durch die Kommunikationsmodule (74, 75, 81) der Nutzerumgebungen (3, 4), bzw. durch das Kommunikationsmodul (76) der Basisumgebung (5) definiert. Interaktionen über diese Schnittstellen werden durch Funktionen der Sicherheitsmodule (73, 79, 80, 83) der Nutzerumgebungen (3, 4) und der Basisumgebung (5) abgesichert. Figur 10 zeigt die notwendigen Schnittstellen am Beispiel von zwei Parteien (30, 31) (A und B) eines CAP. Diese Darstellung schränkt nicht ein, dass auch eine Partei oder mehr als zwei Parteien einen CAP verwenden können.

- Die Schnittstellen I_{NA} (12) und I_{NB} (14) ermöglichen Interaktionen von Parteien (30, 31) (A und B) mit ihren jeweiligen Nutzerumgebungen (3, 4) eines CAP. Nur sicherheitstechnisch überprüfte Parteien (30, 31) können auf die entsprechende Nutzerumgebung (3, 4) zugreifen.
- Die Schnittstellen I_{NAB} (13) und I_{NBB} (15) dienen der Interaktion zwischen den Nutzerumgebungen (3, 4) (A und B) und der Basisumgebung (5). Diese Interaktion ist unter anderem erforderlich, damit die Basisumgebung (5) Nutzerumgebungen (3, 4) für neue Parteien (30, 31) generieren, verändern oder löschen kann. Zudem sind die Schnittstellen (13, 15) erforderlich, damit Nutzerumgebungen (3, 4) dedizierte Grundfunktionen der Basisumgebung (5) aufrufen können.
- Die Schnittstelle I_{BN} (16) ermöglicht den Aufruf von Grundfunktionen der Basisumgebung (5), jedoch nur ausgehend von einer Nutzerumgelung (3, 4) dieses CAP. Die Basisumgebung (5) ist nicht direkt von Umgebungen (beispielsweise einem externen Managementsystem (84)), die außerhalb des CAP liegen erreichbar, sondern nur indirekt über die Schnittstellen (12,14) der Nutzerumgebungen (3, 4) und der Schnittstellen (13, 15, 16) von den Nutzerumgebungen (3, 4) zur Basisumgebung (5). Welche Grundfunktionen der Basisumgebung (5) von einer Nutzerumgebung (3, 4) aufgerufen werden können, wird durch das Kontrollmodul (77) und das Regelwerk (78) des CAP bestimmt.
- Die Schnittstellen I_{NAR} (9) und I_{NBR} (10) stellen die Interaktionsmöglichkeiten zwischen Nutzerumgebungen (3, 4) und den für die jeweiligen Nutzerumgebungen (3, 4) durch Nutzungsrechte spezifizierte Ressourcen (6, 7) oder Ressourcenanteile (6, 7) bereit. Solche Interaktionen können beispielsweise Funktionsaufrufe der Nutzerumgebung (3, 4) sein, die zur Nutzung von Ressourcen (6, 7) dieser Umgebung führen.
- Die Schnittstelle I_{BR} (11) ermöglicht die Interaktion der Basisumgebung (5) mit den Ressourcen (6, 7, 8) des CAP. Durch diese Schnittstelle (11) kann beispielsweise die Konfiguration und Überwachung der Ressourcen (6, 7, 8) eines CAP durch die Basisumgebung (5) realisiert werden. Beispielsweise erfolgt über diese Schnittstelle (11) die Überwachung der Einhaltung von Restriktionen, die durch das Regelwerk (78) für die Parteien (30, 31) des CAP spezifiziert sind.
- Die Schnittstellen I_{RRA} (17) und I_{RRB} (18) sind semipermeabel. Das bedeutet, eine Interaktion ausgehend von der Basisumgebung (5) zu nutzerspezifischen Ressourcen (6, 7) ist möglich. Durch Aufruf dedizierter Grundfunktionen der Basisumgebung (5) können über die Schnittstellen I _{BR}(11), I_{RRA} (17) und 1_{RRB} (18) beispielsweise die Restriktionen des Regelwerkes (78) zur Zuordnung von Nutzungsrechten an Ressourcen (6, 7, 8) oder Ressourcenanteilen (6, 7, 8) auf Nutzerumgebungen (3, 4) technisch umgesetzt werden. Eine Interaktion ausgehend von den durch Nutzungsrechte abgegrenzten Ressourcen (6, 7) einer Nutzerumgebung (3, 4) zu Ressourcen (6, 7, 8), für die keine Nutzungsrechte existieren, ist gemäß der Definition des Cuckoo-basierten Verfahrens jedoch nicht durchführbar und wird durch das Kontrollmodul (77) der Basisumgebung (5) unterbunden.

Die Schnittstellendefinition legt die Zugriffsmöglichkeiten, nicht jedoch die Art und Weise des Zugriffs auf Umgebungen (3, 4, 5) bzw. Ressourcen (6, 7, 8) fest. Die Art und Weise des Zugriffs kann beispielsweise durch beliebige Protokolle, wie z.B. SSH, HTTP, Telnet, FTP, TFTP, DHCP, SOAP, SNMP, TR069 durch lokale bzw. entfernte Funktionsaufrufe, z.B. CORBA, RMI, RPC, Webservices durch Agenten-basierte Prinzipien, z.B. mobile Agenten, oder andere Methoden spezifiziert werden.

Zur Aushandlung von Nutzungsrechte für Ressourcen (6, 7, 8) des CAP sind folgende Prozesse erforderlich, die beispielhaft in Figur 12 mit zwei Parteien (30, 31) (A und B) eines CAP dargestellt sind. Diese Darstellung schränkt die Möglichkeit nicht ein, dass nur eine Partei allein oder auch mehr als zwei Parteien gemeinsam einen CAP verwenden können.

Die Aushandlung der Nutzungsrechte zwischen Parteien (30, 31) kann zustandsgesteuert realisiert sein. Für den CAP sind beispielhaft die drei Zustände idle (26), prepared (27), und ready (28), definiert (Figur 11).

Nach der Auslieferung durch den Hersteller kann sich der CAP in einem der beiden Grundzustände (19) idle (26) oder ready (28) befinden.

In (20) dem Zustand idle (28) enthält der CAP die Basisumgebung (5) und eine Nutzerumgebung (3) für eine Partei A (30). Der Partei A (30) wurde durch das Sicherheitsmodul (79) der Basisumgebung (5) bereits eine gültige Identifikationsmöglichkeit zum Zugriff auf ihre Nutzerumgebung (3) ausgestellt. Der Partei A (30) wird diese Identifikationsmöglichkeit bei der Auslieferung des CAP durch den Hersteller mitgeteilt, beispielsweise in schriftlicher Form. Die Partei A (30) ist in diesem Fall der Besitzer des CAP. Die Nutzungsrechte an den Ressourcen (6) des CAP sind der Partei A (30) vollständig zugeteilt bzw. sind vollständig in ihrer Nutzerumgebung (3) enthalten. Das Regelwerk (78) der Basisumgebung (5) ist entsprechend konfiguriert. Beim ersten erfolgreichen Zugriff auf die Nutzerumgebung (3) durch die Partei A (30) (nach erfolgreiche Identifikation), wechselt (21) der CAP in den Zustand ready (28).

Der Zustand prepared (27) wird erreicht, wenn
1. eine oder mehrere neue Nutzerumgebungen (3, 4) erstellt werden soll(en)
2. die Restriktionen von Nutzerumgebungen (3, 4) verändert werden sollen (bspw. Änderungen von Nutzungsrechten), oder Einstellungen des CAP verändert werden sollen, die über die Nutzungsrechte von Nutzerumgebungen (3, 4) hinaus gehen
   oder
3. eine oder mehrere Nutzerumgebung(en) (3, 4) gelöscht werden soll(en).

Dazu wird entweder ein Änderungsauftrag durch eine Partei (30, 31) des CAP an den CAP übertragen oder es sind Restriktionen von Nutzerumgebungen (3, 4) abgelaufen oder wurden durch Parteien (30, 31) verletzt.

Der Fall (1) tritt ein, wenn eine Partei (30, 31) (z.B. Partei A (30)) die ihr zugesprochenen Nutzungsrechte an Ressourcen (6, 7) eines CAP teilweise oder vollständig an einen Dritten (bspw. Partei B (31)) abtritt. Dabei werden folgende Prozesse durchlaufen:

Die Partei A (30) wählt einen entsprechenden Anteil ihrer Ressourcen (6) am CAP für eine Abtretung an, in diesem Beispiel eine potentielle Partei B (31) aus. Die Auswahl der Ressourcen (6, 7) stellt eine Interaktion der Partei (30, 31) mit ihrer Nutzerumgebung (3, 4) dar. Sie erfolgt dementsprechend über die Schnittstelle I _{NA} (12).

Dabei wird eine Anfrage durch die Partei A (30) zur Ermittlung von Informationen über verfügbare eigene Ressourcen (6) von der Partei A (30) zunächst an das Kommunikationsmodul (74) dann über das Sicherheitsmodul (73) an das Managementmodul (72) übertragen. Der Übertragungspfad verläuft für diese Interaktion gemäß der Bezeichner in Figur 12 somit folgendermaßen: 32->33->34 Hier wird ohne die Allgemeinheit einzuschränken angenommen, dass das Managementmodul (72) innerhalb der Nutzerumgebung A (3) platziert ist. Das Sicherheitsmodul (73) überprüft die Identifikationsmöglichkeit der Partei A (30). Nur nach erfolgreicher Authentisierung, wird die Anfrage an das Managementmodul (72) übergehen. Das Managementmodul (72) ermittelt die Informationen über die verfügbaren Ressourcen (6), in dem es über das Sicherheitsmodul (73) und über das Kommunikationsmodul (74) der Nutzerumgebung A (3) eine Anfrage über die Schnittstellen (13,16), über das Kommunikationsmodul (76) und über das Sicherheitsmodul (79) an das Kontrollmodul (77) der Basisumgebung (5) überträgt. Der Übertragungspfad verläuft für diese Interaktion gemäß der Bezeichner in Figur 12 somit folgendermaßen: 35->36->37->38->39. Das Sicherheitsmodul (79) überprüft die Identifikationsmöglichkeit der Partei A (30) bzw. der Nutzerumgebung A (3). Nur nach erfolgreicher Authentisierung, wird die Anfrage an das Kontrollmodul (77) übergeben (39). Das Kontrollmodul (77) ermittelt aus dem Regelwerk (78) die erfragten Informationen und überträgt die Information über das Sicherheitsmodul (79), das Kommunikationsmodul (76) der Basisumgebung (5), die Schnittstellen (16,13), das Kommunikationsmodul (74), das Sicherheitsmodul (73) zum Managementmodul (72) der Nutzerumgebung A (3). Der Übertragungspfad verläuft für diese Interaktion gemäß der Bezeichner in Figur 12 somit folgendermaßen: 40->57->58->59->60. Das Managementmodul (72) stellt der Partei A (30) über das Sicherheitsmodul (73), das Kommunikationsmodul (74) und die Schnittstelle I _{NA} (12) die Informationen zur Verfügung. Der Übertragungspfad verläuft für diese Interaktion gemäß der Bezeichner in Figur 12 somit folgendermaßen: 61->62->63. Aus den Informationen über die ausgewählten Ressourcen, zusammen mit einem durch die Partei A (30) festgelegten Abtretungszeitraum und der ausgewählten Partei, der die Ressourcen angeboten werden soll (bspw. die Partei B (31)), wird durch das Managementmodul (72) der Nutzerumgebung A (3) ein Änderungsauftrag erstellt. Dieser Änderungsauftrag kann mit verschiedenen maschinell auswertbaren Sprachen (bspw. XML) spezifiziert werden. Der Änderungsauftrag wird über das Sicherheitsmodul (73), das Kommunikationsmodul (74) der Nutzerumgebung A (3), die Schnittstelle I _{NAB} (13) und die Schnittstelle I_{BN}(16), über das Kommunikationsmodul (76), das Sicherheitsmodul (79) an das Kontrollmodul (77) der Basisumgebung (5) übertragen. Der Übertragungspfad verläuft für diese Interaktion gemäß der Bezeichner in Figur 12 somit folgendermaßen: 35->36->37->38->39.

Das Sicherheitsmodul (79) der Basisumgebung (5) übeiprüft bei der Übergabe zunächst die Identität der Partei A (30), bzw. der Nutzerumgebung A (3). Nur wenn die Identität über die Identifikationsmöglichkeit des Nutzers A erfolgreich bestätigt wurde, wird der Empfang des Änderungsauftrages von der Basisumgebung (5) akzeptiert, bzw. von dem Sicherheitsmodul (79) an das Kontrollmodul (77) übertragen. Die Identität des Nutzers A kann auch durch eine erfolgreich überprüfte Identifikationsmöglichkeit der Nutzerumgebung A (3) gegenüber der Basisumgebung (5) stellvertretend als gültig angenommen werden, wenn die Partei A (30) sich gegenüber ihrer Nutzerumgebung A (3) vorher selbst erfolgreich identifiziert hat. Das Kontrollmodul (77) überprüft die im Änderungsarftrag enthaltenen Informationen mit Hilfe des Regelwerkes (78). So ist es zum Beispiel nicht möglich, dass die im Änderungsarftrag gewünschte Auswahl an Ressourcen Anteile enthält, für die der Auftraggeber des Änderungsaütrages - in diesem Falle die Partei A (30) - keine Zugriffsberechtigung besitzt, bspw. für Ressourcen gemäß (7,8). Der CAP wechselt (24) nach erfolgreicher Überprüfung der Identifikationsmöglichkeit durch das Sicherheitsmodul (79) und der Gültigkeit des Änderungsantrages durch das Kontrollmodul (77) der Basisumgebung (5) in den Zustand "prepared (27)".

Durch das Sicherheitsmodul (79) der Basisumgebung (5) wird, wenn notwendig, eine neue Identifikationsmöglichkeit für die Partei A (30) und eine neue Identifikationsmöglichkeit für die potentielle Partei B (31) generiert. Diese Identifikationsmöglichkeit kann nutzerspezifische Informationen enthalten bzw. mit nutzerspezifischen Informationen auf irgendeine Weise verbunden sein. Nutzerspezifische Informationen beschreiben beispielsweise die maximalen Nutzungsrechte an Ressourcen die die neue Partei B (31) anfordern kann und den Wert für die maximale Nutzungsdauer für die angeforderten Nutzungsrechte an Ressourcen. Diese maximal wählbaren Nutzungsrechte und die maximale wählbare Nutzungsdauer entsprechen den Angaben, die die Partei A (30) für die Abtretung im Änderungsantrag definiert hat. Das Kontrollmodul (77) der Basisumgebung (5) erzeugt aus dem Änderungsauftrag ein Ressourcenangebot für die potentielle Partei B (31), das mindestens die Informationen entsprechend des Ändenungsauftrages der Partei A (30) enthält, also die Ressourcenauswahl und den Zeitraum für die Abtretung. Zusätzlich können weitere Informationen in dieses Ressourcenangebot durch die Basisumgebung (5) integriert werden, beispielsweise eine generierte Identifikationsmöglichkeit für die Partei B (31). Das Ressourcenangebot ist eine technische Spezifikation, die in verschiedenen Spezifikationssprachen, bspw. in XML oder mit Hilfe von Konfigurationsvariablen definiert werden kann. Die Basisumgebung (5) übermittelt das Ressourcenangebot an die potentielle Partei B (31). Die Partei B (31) besitzt in diesem Ausführungsbeispiel ein CAP-externes Managementsystem (84) ohne die Allgemeingültigkeit einzuschränken. Aufgrund der sicherheitstechnischen Einschränkung, dass die Basisumgebung (5) keine direkte Kommunikationsmöglichkeit zu Kommunikationspunkten außerhalb des CAP besitzt, wird das Ressourcenangebot indirekt über die Nutzerumgebung A (3) - also über das Sicherheitsmodul (79), das Kommunikationsmodul (76) der Basisumgebung (5), über die Schnittstellen beginnend bei I_{BN} (16) gefolgt von I_{NAB} (13) und von dort über das Kommunikationsmodul (74) geprüft vom Sicherheitsmodul (73) der Nutzerumgebung A (3) über die Schnittstelle I_{NA} (12) zur Schnittstelle (29) des Managementsystems und von dort über das Kommunikationsmodul (80) und das Sicherheitsmodul (81) - zum Managementmodul (82) der Partei B (31) übertragen. Die indirekte Übertragung wird dabei durch das Sicherheitsmodul (79) der Basisumgebung (5) zusätzlich abgesichert, sodass während des Kommunikationsprozesses Änderungen an dem Inhalt des Ressourcenangebotes erkannt werden können und der Inhalt des Ressourcenangebotes nur durch das Kontrollmodul (77) der Basisumgebung (5) und durch das Managementmodul (82) der potentiellen Partei B (31) erkennbar ist. Werden Änderungen am Ressourcenangebot erkannt, dann wird das Ressourcenangebot sofort ungültig.

Der Übertragungspfad verläuft für diese Interaktion gemäß der Bezeichner in Figur 12 somit folgendermaßen: 56->57->85->67->68.

Das Angebot über Ressourcen wird durch das Managementmodul (82) der potentiellen Partei B (31) entgegengenommen. Das Managementmodul präsentiert das Ressourcenangebot über das Sicherheitsmodul (81), das Kommunikationsmodul (80) und die Schnittstelle (29) des Managementsystems (84) der Partei B (31). Der Übertragungspfad verläuft für diese Interaktion gemäß der Bezeichner in Figur 12 somit folgendermaßen: 69->70->71.

Die potentielle Partei B (31) kann wählen, für welche Ressourcen aus dem Ressourcenangebot sie Nutzungsrechte über welchen Zeitraum erwerben möchte. Die Nutzungsrechte und die Nutzungsdauer können maximal so gewählt werden, wie sie in dem Ressourcenangebot festgelegt sind. Hat die Partei B (31) sich entschieden das Angebot anzunehmen oder abzulehnen wird eine entsprechende Information von der Partei B (31) über die Schnittstelle (29) des Managementsystems (84) das Kommunikationsmodul (80), das Sicherheitsmodul (81) an das Managementmodul (82) des Managementsystems (84) übertragen. Das Sicherheitsmodul (81) überprüft dabei die Identifikationsmöglichkeit der Partei B (31). Nur nach erfolgreicher Überprüfung der Identifikationsmöglichkeit wird die Information an das Managementmodul (82) übertragen.

Das Kontrollmodul (77) der Basisumgebung (5) erfragt in zeitlichen Abständen den Status des Ressourcenangebotes indirekt über die Nutzerumgebung A (3) - also über das Sicherheitsmodul (79), das Kommunikationsmodul (76) der Basisumgebung (5), über die Schnittstellen beginnend bei I_{BN} (16) gefolgt von I_{NAB} (13) und von dort über das Kommunikationsmodul (74) der Nutzerumgebung A (3) über die Schnittstelle I_{NA} (12) zur Schnittstelle (29) des Managementsystems und von dort über das Kommunikationsmodul (80) und das Sicherheitsmodul (81) - beim Managementmodul (82) der Partei B (31). Die indirekte Übertragung wird dabei durch das Sicherheitsmodul (79) der Basisumgebung (5) zusätzlich abgesichert, sodass die Anfrage nur für das Kontrollmodul (77) der Basisumgebung (5) und das Managementmodul (82) der potentiellen Partei B (31) erkennbar ist.

Der Übertragungspfad verläuft für diese Interaktion gemäß der Bezeichner in Figur 12 somit folgendermaßen: 56->57>85->67>68.

Die Antwort auf diese Statusanfrage wird über den Übertragunspfad, gemäß der Bezeichner in Figur 12, (69->70->85->38->39) vom Managementmodul (82) des Managementsystems (84) indirekt über die Nutzerumgebung A (3) zum Kontrollmodul (77) der Basisumgebung (5) übertragen. Die indirekte Übertragung wird dabei durch das Sicherheitsmodul (81) der des Managementsystems (84) zusätzlich abgesichert, sodass die Anfrage nur für das Kontrollmodul (77) der Basisumgebung (5) und das Managementmodul (82) der potentiellen Partei B (31) erkennbar ist. Das Sicherheitsmodul (79) prüft dabei die Identifikationsmöglichkeit des Managementsystems (84). Nur nach erfolgreicher Authentisierung wird die Antwort an das Kontrollmodul (77) übertragen.

Wenn sich die Partei B (31) für das Ressourcenangebot entschieden hat, enthält die Antwort Informationen über die Ressourcenanteile und die Nutzungsdauer, die die Partei B (31) aus dem Ressourcenangebot gewählt hat. In diesem Fall wird der folgende technische Prozess durch die Basisumgebung (5) ausgeführt:

Die Basisumgebung (5) generiert für die neue Partei B (31) eine neue Nutzerumgebung B (4) auf dem CAP, die den Restriktionen der gewählten Nutzungsrechte und der gewählten Nutzungsdauer aus der erhaltenen Antwort für das Ressourcenangebot unterliegt. Gleichzeitig wird die Nutzerumgebung A (3) der Partei A (30) entsprechend angepasst. Das bedeutet, der Partei A (30) werden die Nutzungsrechte, bzw. der Nutzerumgebung A (3) die Ressourcen für die an die Partei B (31) abgetretenen Ressourcen entzogen. Der Entzug der Nutzungsrechte an Ressourcen für die Partei A (30) bzw. der Entzug der Ressourcen für die Nutzerumgebung A (3) sowie die Erteilung der neuen Nutzungsrechte an den abgetretenen Ressourcen für die Partei B (31), bzw. die Übergabe der Ressourcen (7) an die Nutzerumgebung B (4) erfolgt durch das Kontrollmodul (77) der Basisumgebung (5), dass die Spezifikationen des Regelwerkes (78) entsprechend adaptiert. Das Kontrollmodul (77) der Basisumgebung (5) signalisiert der Partei A (30) und der Partei B (31), dass der Änderungsauftrag ausgeführt wurde.

Dabei wird vom Kontrollmodul (77) der Basisumgebung (5) zum Managementmodul (72) der Nutzerumgebung A (3) über den Übertragungspfad 56->57->58->59->60 gemäß der Bezeichner der Figur 12, die Information über die Ausführung des Änderungsauftrages übertragen. Das Sicherheitsmodul (73) überprüft dabei die Identifikationsmöglichkeit der Basisumgebung (5). Nur nach erfolgreicher Überprüfung der Identifikationsmöglichkeit wird die Information an das Managementmodul (72) übertragen.

Zudem wird vom Kontrollmodul (77) der Basisumgebung (5) zum Managementmodul (82) des Managementsystems (84) der Nutzerumgebung B (4) über den Übertragungspfad 40->41->42->43->44>45->46->47, gemäß der Bezeichner der Figur 12, die Information über die Ausführung des Änderungsaftrages übertragen. Das Sicherheitsmodul (81) überprüft dabei die Identifikationsmöglichkeit der Basisumgebung (5). Nur nach erfolgreicher Überprüfung der Identifikationsmöglichkeit wird die Information an das Managementmodul (82) übertragen.

Der CAP ist nun für zwei Parteien (30,31) konfiguriert. Der CAP wechselt (22) in den Zustand ready (28).

Im dem Fall, dass die Antwort auf die Statusanfrage des Ressourcenangebots der Basisumgebung (5) signalisiert, dass das Ressourcenangebot durch die Partei B (31) abgelehnt wurde führt die Basisumgebung (5) folgende technische Prozesse aus:

Das Ressourcenangebot wird durch das Kontrollmodul (77) der Basisumgebung (5) zurückgezogen und gelöscht. Das Kontrollmodul (77) versetzt den CAP wieder in die ursprüngliche Einstellung in dem sich der CAP vor dem erhaltenen Änderungsauftrag befunden hat. Das bedeutet, dass möglicherweise generierte Identifikationsmöglichkeiten für die potentielle Partei B (31) gelöscht werden. Zudem wird dem Managementmodul (72) der Partei A (30) vom Kontrollmodul (77) der Basisumgebung (5) über die Schnittstellen beginnend bei I _{BN} (16) gefolgt von I_{NAB} (13) und von dort über das Kommunikationsmodul (74) und das Sicherheitsmodul (73) signalisiert, dass der Änderungsauftrag abgelehnt wurde und somit nicht durch das Kontrollmodul (77) der Basisumgebung (5) umgesetzt wird. Das Sicherheitsmodul (73) überprüft dabei die Identifikationsmöglichkeit der Basisumgebung (5). Nur nach erfolgreicher Überprüfung der Identifikationsmöglichkeit wird die Information an das Managementmodul (72) übertragen.

Der Übertragungspfad verläuft für diese Interaktion gemäß der Bezeichner in Figur 12 somit folgendermaßen: 56->57->58->59->60. Die Partei A (30) wird entsprechend durch das Managementmodul (72) informiert.

Der CAP ist weiterhin nur für die eine Partei A (30) konfiguriert. Alle Nutzungsrechte, die vor dem Ändenungsauftrag der Partei A (30) zugesprochen waren verbleiben bei der Partei A (30), beziehungsweise alle Ressourcen (6), die vor dem Änderungsauftrag in der Nutzerumgebung A (3) gekapselt waren verbleiben in der Nutzerumgebung A (3). Die Spezifikation des Regelwerks (78) der Basisumgebung (5) wird nicht durch das Kontrollmodul (77) der Basisumgebung (5) verändert, es verbleibt in genau der Konfiguration, die es vor dem Änderungsauftrag hatte. Der CAP wechselt (22) in den Zustand ready (28).

Im Fall (2) wünscht eine Partei (30,31), ohne die Allgemeingültigkeit einzuschränken im Folgenden die Partei A (30), eines CAP Änderungen an den Einstellungen ihrer Nutzerumgebung, ohne die Allgerneingültiakeit einzuschränken im Folgenden an der Nutzerumgebung A (3). Die Auswahl der Einstellungen die geändert werden sollen stellt eine Interaktion der Partei A (30) mit ihrem Managementmodul (72) der Nutzerumgebung A (3) dar. Sie erfolgt dementsprechend über die Schnittstelle I_{NA} (12), das Kommunikationsmodul (74) und das Sicherheitsmodul (73) zum Managementmodul (72) der Nutzerumgebung A (3).

Das Sicherheitsmodul (73) überprüft dabei die Identifikationsmöglichkeit der Partei A (30). Nur nach erfolgreicher Überprüfung der Identifikationsmöglichkeit wird die Information an das Managementmodul (72) übertragen.

Der Übertragungspfad verläuft für diese Interaktion gemäß der Bezeichner in Figur 12 somit folgendermaßen: 32->33->34.

Die Änderungen können einen direkten Einfluss auf die Einstellungen anderer Nutzerumgebungen eines CAP haben. Ob die Änderungen einen Einfluss auf andere Nutzerumgebungen bewirken oder nicht, ist durch die Nutzungsrechte der Partei erkennbar. Änderungen, die nicht allein mit den Nutzungsrechten einer Partei umgesetzt werden können, sondern auch Ressourcen betreffen, die nicht im Bereich der Nutzungsrechte der Partei liegen, sondern beispielsweise Nutzungsrechte an diesen Ressourcen durch andere Parteien bestehen, bedürfen der Zustimmung dieser Parteien bevor die Änderungen umgesetzt werden. Deshalb wird aus den Informationen über die ausgewählten Änderungen durch das Managementmodul (72) der Partei A (30) ein Änderungsauftrag erstellt. Dieser Änderungsantrag kann mit verschiedenen maschinell auswertbaren Sprachen (bspw. XML) spezifiziert werden. Der Änderungsauftrag wird über das Sicherheitsmodul (73) und das Kommunikationsmodul (74) der Nutzerumgebung A (3), über die Schnittstelle I _{NAB} (13) und die Schnittstelle I_{BN}(16), das Kommunikationsmodul (76) und das Sicherheitsmodul (79) an das Kontrollmodul (77) der Basisumgebung (5) übergeben.

Das Sicherheitsmodul (79) überprüft dabei die Identifikationsmöglichkeit der Nutzerumgebung A (3). Nur nach erfolgreicher Überprüfung der Identifikationsmöglichkeit wird die Information an das Kontrollmodul (77) übertragen.

Der Übertragungspfad verläuft für diese Interaktion gemäß der Bezeichner in Figur 12 somit folgendermaßen: 35->36->37->38->39.

Das Partei-neutrale Kontrollmodul (77) überprüft die im Änderungsantrag enthaltenen Informationen mit Hilfe des Regelwerkes (78).

Dazu wechselt (24) der CAP in den Zustand "prepared (27)".

Durch die Informationen des Regelwerkes (78) ist dem Kontrollmodul (77) bekannt, welchen Einfluss die Umsetzung der Einstellungsänderungen, definiert im Änderungsantrag, auf die bestehenden Nutzerumgebungen (3, 4) haben.

Das Kontrollmodul (77) überträgt eine Änderungsanfrage an alle Parteien (30,31) des CAP, deren Nutzerumgebung durch die im Änderungsantrag enthaltenen Einstellungswünsche der Partei A (30) beeinflusst werden. Im Folgenden wird ohne Einschränkung der Allgemeinheit angenommen, dass die Nutzerumgebung B (4) von der Umsetzung der Einstellungswünsche der Partei A (30) beeinflusst wird.

Dann überträgt das Kontrollmodul (77) der Basisumgebung (5) eine Änderungsanfrage an das Managementmodul (82) der Partei B (31) über das Sicherheitsmodul (79) und das Kommunikationsmodul (76) der Basisumgebung (5), über die Schnittstellen I_{BN} (16), I_{NBB} (15) und I_{NB} (14) zur Schnittstelle (29) und dort über das Kommunikationsmodul (80) und das Sicherheitsmodul (81) des Managementsystems (84). Dabei identifiziert sich die Basisumgebung (5) zunächst gegenüber dem Sicherheitsmodul (81) des Managementsystems (84) der Partei B (31) mit ihrer Identifikationsmöglichkeit. Erst nach der erfolgreichen Identifikation akzeptiert das Managementsystem der Partei B (31) den Empfang der Änderungsanfrage. Zudem wird durch das Sicherheitsmodul (79) der Basisumgebung (5) die Übertragung zusätzlich abgesichert, sodass der Änderungsalftrag nur durch das Kontrollmodul (77) der Basisumgebung (5) und durch das Managementmodul (82) des Managementsystems (84) erkennbar ist.

Der Übertragungspfad verläuft für diese Interaktion gemäß der Bezeichner in Figur 12 somit folgendermaßen: 40->41->42->43->44->45->46->47.

Das Managementmodul (82) signalisiert der Partei B (31) eine neue Änderungsanfrage über das Sicherheitsmodul (81), das Kommunikationsmodul (80) und die Schnittstelle (29) des Managementsystems (84).

Der Übertragungspfad verläuft für diese Interaktion gemäß der Bezeichner in Figur 12 somit folgendermaßen: 69->70->71.

Die Partei B (31) hat nun die Möglichkeit, der Änderungsanfrage zuzustimmen, oder sie abzulehnen.

Das Kontrollmodul (77) der Basisumgebung (5) erhält die Antwort auf die Änderungsanfrage entweder durch Signalisierung durch das Managementmodul (82) der Partei B (31), nachdem die Partei B (31) ihre Entscheidung über Zustimmung oder Ablehnung getroffen hat oder durch eine in bestimmten Zeitabständen wiederholte Abfrage des Status der Änderungsanfrage beim Managementmodul (82) der Partei B (31), solange bis die Partei B (31) ihre Entscheidung über Zustimmung oder Ablehnung getroffen hat. Der Übertragungspfad verläuft für diese Interaktion gemäß der Bezeichner in Figur 12 somit folgendermaßen:
48->49->50->51->52->53->54>55.

Haben alle Parteien, denen eine Änderungsanfrage als Folge des Änderungsantrages der Partei A (30) übertragen wurde ihrer jeweiligen Änderungsanfrage zugestimmt - in diesem Fall beispielsweise die Partei B (31), so vollzieht das Kontrollmodul (77) der Basisumgebung (5) den folgenden technischen Prozess:

Die Änderungen der Einstellungen werden gemäß dem Änderungsauftrag der Partei A (30) durch das Kontrollmodul (77) der Basisumgebung (5) umgesetzt. Das Regelwerk (78) der Basisumgebung (5) wird gegebenenfalls entsprechend adaptiert. Allen Parteien, deren Nutzerumgebung von diesen Einstellungsänderungen betroffen sind, wird gegebenenfalls durch das Sicherheitsmodul (79) der Basisumgebung (5) jeweils eine neue Identifikationsmöglichkeit generiert - in diesem Beispiel somit der Partei A (30) und der Partei B (31). Allen Partien, deren Nutzerumgebungen von diesen Einstellungsänderungen betroffen sind, wird die Umsetzung der Einstellungsänderungen signalisiert - in diesem Beispiel somit der Partei A (30) und der Partei B (31).

Dazu wird eine Bestätigung des durchgeführten, umgesetzten Änderungsantrages vom Kontrollmodul (77) der Basisumgebung (5) an das Managementmodul (72) der Partei A (30) übertragen, über das Sicherheitsmodul (79) und das Kommunikationsmodul (77) der Basisumgebung (5), über die Schnittstellen I _{BN} (16), I _{NAB} (13), das Kommunikationsmodul (74) und das Sicherheitsmodul (73) der Nutzerumgebung A (3). Das Sicherheitsmodul (73) überprüft dabei die Identifikationsmöglichkeit der Basisumgebung (5). Nur nach erfolgreicher Überprüfung der Identifikationsmöglichkeit wird die Information an das Managementmodul (72) übertragen.

Der Übertragungspfad verläuft für diese Interaktion gemäß der Bezeichner in Figur 12 somit folgendermaßen: 56->57->58->59->60. Gegebenenfalls wird der Partei A (30) zudem eine neu generierte Identifikationsmöglichkeit übertragen, über diesen gleichen Übertragunspfad. Die Partei A (30) wird durch das Managementmodul (72) der Nutzerumgebung A (3) informiert - entweder durch Signalisierung vom Managementmodul (72) zur Partei A (30) oder durch eine Anfrage der Partei A (30) an das Managementmodul (72) - zumindest über das Sicherheitsmodul (73), das Kommunikationsmodul (74) und die Schnittstelle I _{NA}(12).

Der Übertragungspfad verläuft für diese Interaktion gemäß der Bezeichner in Figur 12 somit folgendermaßen: 61->62->63.

Zudem wird eine Bestätigung des durchgeführten, umgesetzten Änderungsauftrages vom Kontrollmodul (77) der Basisumgebung (5) an das Managementmodul Partei B (31) übertragen, über das Sicherheitsmodul (79) und das Kommunikationsmodul (76) der Basisumgebung (5), über die Schnittstellen 1 _{BN} (16),I_{NBB} (15) und I_{NB} (14) zur Schnittstelle (29) und dort über das Kommunikationsmodul (80) und das Sicherheitsmodul (81) des Managementsystems (84). Dabei identifiziert sich die Basisumgebung (5) zunächst gegenüber dem Sicherheitsmodul (81) des Managementsystems (84) der Partei B (31) mit ihrer Identifikationsmöglichkeit. Erst nach der erfolgreichen Identifikation akzeptiert das Managementsystem der Partei B (31) den Empfang der Information. Zudem wird durch das Sicherheitsmodul (79) der Basisumgebung (5) die Übertragung zusätzlich abgesichert, sodass die Information nur durch das Kontrollmodul (77) der Basisumgebung (5) und durch das Managementmodul (82) des Managementsystems (84) erkennbar ist.

Der Übertragungspfad verläuft für diese Interaktion gemäß der Bezeichner in Figur 12 somit folgendermaßen: 56->64>65->43->44>66->67->68.

Das Managementmodul (82) signalisiert der Partei B (31) eine neue Änderungsanfrage über das Sicherheitsmodul (81), das Kommunikationsmodul (80) und die Schnittstelle (29) des Managementsystems (84).

Der Übertragungspfad verläuft für diese Interaktion gemäß der Bezeichner in Figur 12 somit folgendermaßen: 69->70->71. Gegebenenfalls wird der Partei B (31) eine neu generierte Identifikationsmöglichkeit übertragen.

Der CAP wechselt (22) von dem Zustand "prepared (27)" in den Zustand "ready (28)".

Hat eine der Parteien (30, 31), denen eine Ändeuungsanfrage als Folge des Änderungsauftrages der Partei A (30) übertragen wurde ihre jeweilige Änderungsanfrage abgelehnt - in diesem Fall beispielsweise die Partei B (31), so vollzieht das Kontrollmodul (77) der Basisumgebung (5) den folgenden technischen Prozess:

Der Änderungsauftrag wird durch das Kontrollmodul (77) der Basisumgebung (5) nicht umgesetzt. Es werden keine Änderungen an Einstellungen vorgenommen. Allen Parteien (30, 31), die über den Änderungsauftrag mit einer Änderungsanfrage informiert wurden, wird signalisiert, dass keine Umsetzung des Änderungsauftrages erfolgt ist - in diesem Beispiel also der Partei A (30) und der Partei B (31).

Dazu wird eine Ablehnung des angefragten Änderungsauftrages vom Kontrollmodul (77) der Basisumgebung (5) an das Managementmodul (72) der Partei A (30) übertragen, über das Sicherheitsmodul (79) und das Kommunikationsmodul (77) der Basisumgebung (5), über die Schnittstellen I _{BN} (16), I_{NAB} (13), das Kommunikationsmodul (74) und das Sicherheitsmodul (73) der Nutzerumgebung A (3). Das Sicherheitsmodul (73) überprüft dabei die Identifikationsmöglichkeit der Basisumgebung (5). Nur nach erfolgreicher Überprüfung der Identifikationsmöglichkeit wird die Ablehnung an das Managementmodul (72) übertragen.

Der Übertragungspfad verläuft für diese Interaktion gemäß der Bezeichner in Figur 12 somit folgendermaßen: 56->57->58->59->60.

Zudem wird ein Widerruf der Änderungsanfrage vom Kontrollmodul (77) der Basisumgebung (5) an das Managementmodul (82) der Partei B (31) übertragen, über das Sicherheitsmodul (79) und das Kommunikationsmodul (76) der Basisumgebung (5), über die Schnittstellen I_{BN} (16), I_{NBB} (15) und I_{NB} (14) zur Schnittstelle (29) und dort über das Kommunikationsmodul (80) und das Sicherheitsmodul (81) des Managementsystems (84). Dabei identifiziert sich die Basisumgebung (5) zunächst gegenüber dem Sicherheitsmodul (81) des Managementsystems (84) der Partei B (31) mit ihrer Identifikationsmöglichkeit. Erst nach der erfolgreichen Identifikation akzeptiert das Managementsystem der Partei B (31) den Empfang des Widerrufs. Zudem wird durch das Sicherheitsmodul (79) der Basisumgebung (5) die Übertragung zusätzlich abgesichert, sodass der Widerruf nur durch das Kontrollmodul (77) der Basisumgebung (5) und durch das Managementmodul (82) des Managementsystems (84) erkennbar ist.

Der Übertragungspfad verläuft für diese Interaktion gemäß der Bezeichner in Figur 12 somit folgendermaßen: 56->64->65->43->44>66->67->68.

Der CAP wechselt (22) von dem Zustand "prepared (27)" in den Zustand "ready" (28).

Die Löschung einer Nutzerumgebung kann aufgrund eines Änderungsauftrags - entsprechend dem Fall (3) - durch den Ablauf einer vereinbarten Restriktion (bspw. Ablauf der Nutzungsdauer an Nutzungsrechten) oder durch unautorisiertes Verhalten der Partei einer Nutzerumgebung erfolgen.

Die Löschung einer Nutzerumgebung wird durch das Kontrollmodul (77) der Basisumgebung (5) eingeleitet. Im Folgenden wird ohne Einschränkung der Allgemeingültigkeit der Partei B (31) die Nutzerumgebung B (4) entzogen. Die Identifikationsmöglichkeit der Partei B (31) wird durch das Kontrollmodul (77) der Basisumgebung (5) gelöscht. Die in der Nutzerumgebung B (4) gekapselten Ressourcen (7) werden durch das Kontrollmodul (77) der Basisumgebung (5) freigegeben. Die freigegebenen Ressourcen (7), bzw. die entzogenen Nutzungsrechte können nun an andere Parteien (oder eine andere Partei) übergeben werden. Beispielsweise können die Nutzungsrechte wieder an den Besitzer des CAP (in diesem Fall Partei A (30)) übergehen.

Dazu wird die Nutzerumgebung A (3) der Partei A (30) um diese freigegebenen Ressourcen (7), bzw. deren Nutzungsrechte um die Nutzungsrechte an diesen Ressourcen (7) erweitert. Das Kontrollmodul (77) setzt diese Erweiterung der Nutzerumgebung A (3) um und adaptiert die Spezifikationen des Regelwerks (78) gemäß diesen Veränderungen:
- Löschung der Spezifikationen für die Nutzerumgebung B (4)
- Adaptierung der Spezifikationen für die Nutzerumgebung A (3)

Gegebenenfalls wird für die Partei A (30), eine neue Identifikationsmöglichkeit durch das Sicherheitsmodul (79) der Basisumgebung (5) erstellt. Eine Information über die Erweiterung der Nutzerumgebung A (3) und gegebenenfalls eine neue Identifikationsmöglichkeit wird über das Sicherheitsmodul (79) und das Kommunikationsmodul (77) der Basisumgebung (5), über die Schnittstellen I _{BN} (16), I _{NAB} (13), das Kommunikationsmodul (74) und das Sicherheitsmodul (73) der Nutzerumgebung A (3) an das Managementmodul (72) der Partei A (30) übertragen. Das Sicherheitsmodul (73) überprüft dabei die Identifikationsmöglichkeit der Basisumgebung (5). Nur nach erfolgreicher Überprüfung der Identifikationsmöglichkeit wird die Information an das Managementmodul (72) übertragen.

Der Übertragungspfad verläuft für diese Interaktion gemäß der Bezeichner in Figur 12 somit folgendermaßen: 56->57->58->59->60. Die möglicherweise in der Identifikationsmöglichkeit enthaltenen nutzerspezifischen Informationen entsprechen den geänderten Restriktionen (neue Nutzungsrechte). Die Partei A wird über die Erweiterung vom Managmentmodul (72) der Nutzerumgebung A (3) unterrichtet.

Das Managementmodul (82) des Managementsystems (84) der Partei B (31) wird über die Entziehung ihrer Nutzungsrechte und die Löschung der Nutzerumgebung B von dem Kontrollmodul (77) der Basisumgebung (5) informiert. Dazu überträgt das Kontrollmodul (77) der Basisumgebung (5) vor der Löschung der Nutzerumgebung B eine entsprechende Information an das Managementmodul (82) der Partei B (31), über das Sicherheitsmodul (79) und das Kommunikationsmodul (76) der Basisumgebung (5), über die Schnittstellen I_{BN} (16), I_{NBB} (15) und I_{NB} (14) zur Schnittstelle (29) und dort über das Kommunikationsmodul (80) und das Sicherheitsmodul (81) des Managementsystems (84). Dabei identifiziert sich die Basisumgebung (5) zunächst gegenüber dem Sicherheitsmodul (881) des Managementsystems (84) der Partei B (31) mit ihrer Identifikationsmöglichkeit. Erst nach der erfolgreichen Identifikation akzeptiert das Managementsystem der Partei B (31) den Empfang der Information. Zudem wird durch das Sicherheitsmodul (79) der Basisumgebung (5) die Übertragung zusätzlich abgesichert, sodass die Information nur durch das Kontrollmodul (77) der Basisumgebung (5) und durch das Managementmodul (82) des Managementsystems (84) erkennbar ist. Der Übertragungspfad verläuft für diese Interaktion gemäß der Bezeichner in Figur 12 somit folgendermaßen: 56->64>65->43->44>66->67->68. Der CAP wechselt (22) von dem Zustand "prepared (27)" in den Zustand "ready" (28).

Damit der CAP nach einer endlichen Zeit in den Zustand ready (28) wechselt, können endliche Ablaufzeiten für den Zustand prepared (27) definiert sein. Das bedeutet, auch wenn beispielsweise der Änderungsauftrag noch nicht durch die Basisumgebung (5) umgesetzt wurde, beispielsweise weil noch nicht alle Partien über die Änderungsanfragen für den Änderungsauftrag entschieden haben, kann der Änderungsauftrag abgebrochen werden. Eine Ablaufzeit bestimmt dabei, wie lange ein Änderungsauftrag unbetätigt existieren darf. Nachdem die Ablaufzeit überschritten wurde, wird der Änderungsauftrag als nicht bestätigt durch die Basisumgebung (5) zurückgewiesen, bzw. widerrufen. Die Änderungen werden durch die Basisumgebung (5) nicht umgesetzt, die Spezifikation des Regelwerkes (78) wird nicht verändert. Zu allen Managementmodulen der Parteien (30, 31), die den Änderungsauftrag innerhalb der Ablaufzeit bestätigt haben übermittelt das Kontrollmodul (77) der Basisumgebung (5) über die Schnittstelle I_{BN} und die entsprechenden Schnittstellen der Nutzerumgebungen (3, 4) dieser Partien (30, 31) einen Widerruf gesichert über die Sicherheitsmodule der Basisumgebung (5) und der entsprechenden Nutzerumgebungen (3, 4), wie bereits beschrieben (siehe Prozessablauf für den Fall, dass eine Partei eine Änderungsanfrage abgelehnt hat). Das Managementmodul der Partei, die den Änderungsauftrag erteilt hat wird durch das Kontrollmodul (77) der Basisumgebung (5) über die Zurückweisung informiert. Das Kontrollmodul (77) der Basisumgebung (5) überträgt dazu an das Managementmodul dieser Partei eine Ablehnung für den Änderungsauftrag über die Schnittstelle I_{BN} (16) und die entsprechenden Schnittstellen der Nutzerumgebung dieser Partei (30, 31), gesichert über die Sicherheitsmodule der Basisumgebung (5) und dieser Nutzerumgebung, wie bereits beschrieben (siehe Prozessablauf für den Fall, dass eine Partei eine Änderungsanfrage abgelehnt hat). Der CAP wechselt (22) in den Zustand ready (28).

Bei einem CAP, der sich in (23) dem Zustand ready (28) befindet, sind alle Nutzerumgebungen (3, 4) des CAP stabil festgelegt. Stabil bedeutet dabei, dass alle Nutzerumgebungen (3, 4) des CAP vollständig mit gültigen, im Regelwerk (78) der Basisumgebung (5) spezifizierten Restriktionen umgesetzt sind. Alle Parteien (30, 31) können über ihre Identifikationsmöglichkeit auf ihre jeweilige Nutzerumgebung (3, 4) zugreifen und sie im Rahmen der festgelegten Restriktionen beliebig gestalten (Software installieren oder löschen, beliebige Dienste bereitstellen, etc.). Die Einhaltung der ausgehandelten, im Regelwerk (78) spezifizierten Restriktionen wird durch das Kontrollmodul (77) der Basisumgebung (5) des CAP überwacht. Die Restriktionen können nicht einseitig durch eine Partei (30, 31) verändert werden, wenn die Änderung die Restriktionen anderer Parteien (30, 31) in irgendeiner Weise beeinflusst. Der Zustand "ready" (28) kann u.A. in drei verschiedenen Fällen verlassen werden (24) und kann in diesen Fällen in den Zustand "prepared (27)" übergehen:
- durch einen Änderungsauftrag der durch eine Partei (30, 31) des CAP an das Kontrollmodul (77) der Basisumgebung (5) übertragen wird
- nach dem Ablauf einer definierten Gültigkeitsdauer für Restriktionen (Nutzungsdauer abgelaufen)
- durch unautorisierte Überschreitung der Restriktionen durch eine Partei (30, 31)

Eine Veränderung der Restriktionen darf nur durch gemeinsame Verhandlung mit den Parteien (30, 31) erreicht werden, deren Nutzerumgebungen (3, 4) durch die Änderung beeinflusst werden. Eine Änderung von Restriktionen, die durch eine Partei (30, 31) des CAP gewünscht wird, kann deshalb nur durch einen Änderungsauftrag eingeleitet werden. Die Partei (30, 31), die eine Änderung an ihren Restriktionen wünscht, muss einen solchen Änderungsauftrag an das Kontrollmodul (77) der Basisumgebung (5) übertragen. Wird ein Änderungsauftrag erfolgreich eingeleitet, dann wechselt (24) der CAP in den Zustand prepared (27) und verbleibt (25) dort solange, bis der Änderungsantrag bearbeitet oder abgebrochen wurde.

Im Falle einer erkannten, unautorisierten Überschreitung von Restriktionen durch eine Partei (30, 31), können dieser Partei (30, 31) ihre Nutzungsrechte entzogen werden. Dazu bewirkt das Kontrollmodul (77) der Basisumgebung (5) selbst eine Änderung der Restriktionen. Der CAP wechselt (24) dazu in den Zustand prepared (27).

Für Restriktionen kann eine endliche Gültigkeitsdauer bestehen. Nach dem Ablauf dieser Gültigkeitsdauer für Restriktionen kann das Kontrollmodul (77) der Basisumgebung (5) des CAP selbst eine Änderung der Restriktionen bewirken. Der CAP wechselt (24) in den Zustand prepared (27).

Zusammenfassend liegt das Ziel der Erfindung darin, mehreren Parteien (30, 31) zu erlauben einen Zugangspunkt oder ein Netz derartiger Zugangspunkte parallel zu verwenden. Beispielsweise verwenden zwei oder mehrere Provider ein und denselben Zugangspunkt an einer Lokalität, um darüber jeweils ihr WLAN-Netz anzubieten.

Demnach besitzt keine Partei (30, 31) mehr die Obergewalt über den jeweiligen Zugangspunkt, sondern nur noch über definierte Anteile dieses Zugangspunktes. Dabei wird der Zugangspunkt in mehrere Umgebungen geteilt. Jede Partei (30, 31) hat nur innerhalb ihrer Umgebung die Obergewalt, aber nicht über den gesamten Zugangspunkt.

Um ein Vertrauensverhältnis zwischen den Parteien (30, 31) für dieses Szenario zu erreichen, darf keine Partei (30, 31) eine Obergewalt über den gesamten Zugangspunkt besitzen. Mit der Erfindung wird dieser "Supervisor" eliminiert und alle Veränderungen, die mehr als eine Umgebung betreffen werden von den betroffenen Parteien (30, 31) gemeinsam entschieden. Dazu beschreibt die Erfindung ein Verfahren und eine Anordnung, wie dieser gemeinsame Entscheidungsprozess technisch umgesetzt werden kann.

Eine privilegierte Umgebung (die Basisumgebung (5)) besitzt die eigentlichen Rechte des Supervisors, auf die jedoch keine Partei (30, 31) Zugriff hat, sondern die von einem Partei-neutralen Kontrollmodul (77) und einem spezifizierten Regelwerk (78) verwaltet wird. Die Parteien (30, 31) kommunizieren bei Änderungswünschen, die ihre eigenen Rechte übersteigen mit diesem Kontrollmodul (77), das nun mit den anderen Parteien (30, 31) kommuniziert und so als neutrales Element den Aushandlungsprozess steuert. Nur wenn alle Parteien (30, 31) dem Kontrollmodul (77) ihre Zustimmung zum dem Änderungswunsch der Auftrag-Gebenden Partei (30, 31) signalisieren, wird die Änderung durch das Kontrollmodul (77) umgesetzt, ansonsten abgelehnt.

## Patentansprüche

1. Verfahren zur Bildung eines auf verschiedenen Topologien basierenden Zugangsnetzwerks zu einem öffentlichen Netzwerk mittels einer Infrastruktur, die durch einen oder mehrere Anbieter zur gemeinsamen, parallelen Nutzung von mehreren Parteien zur Verfügung gestellt wird und die aus mindestens einem Netzwerkzugangspunkt (CAP) besteht, dadurch gekennzeichet dass
- der Netzwerkzugangspunkt (CAP) mindestens eine Nutzerumgebung und eine Basisumgebung enthält,
- in einer Nutzerumgebung die Nutzungsrechte an Ressourcen , die Daten und Dateneinheiten sowie die Funktionen eines Nutzers dieses Netzwerkzugangspunktes (CAP) gekapselt sind und die Nutzerumgebung mindestens ein Kommunikationsmodul, ein Sicherheitsmodul und ein Managementmodul enthält;
- weiterhin in der Basisumgebung die Grundfunktionen gekapselt sind, die über die Grenzen der abgekapselten Nutzerumgebungen des Netzwerkzugangspunktes (CAP) hinaus operieren und die Basisumgebung (5) mindestens ein Kommunikationsmodul, ein Sicherheitsmodul, ein Kontrollmodul und ein Regelwerk enthält, mit den Schritten: Aufteilung der Nutzungsrechte an Ressourcen eines Netzwerkzugangspunktes (CAP) zwischen mehreren, gleichberechtigten Nutzern nach einem auszuhandelnden Regelwerk wobei von der jeweiligen Partei nur im Umfang dieser Verteilung und ohne Zugriff auf die Ressourcen der anderen Partei eine Nutzung erfolgt,
Aufteilung der Nutzungsrechte an Ressourcen des Netzwerkzugangspunktes (CAP) nur im gegenseitigen Einvernehmen aller Parteien, deren Nutzerumgebung von der Änderung betroffen ist, über einen abgesicherten Aushandlungsprozess und wobei die Aufteilung nur durch Grundfunktionen der Basisumgebung umgesetzt wird.

2. Verfahren nach Anspruch 1,
**dadurch gekennzeichnet, dass**
die in der Basisumgebung eines Netzwerkzugangspunktes (CAP) gekapselten Grundfunktionen umfassen:
- ein Regelwerk, das die zwischen den gleichberechtigten Nutzern dieses Netzwerkzugangspunktes (CAP) vertraglich ausgehandelten Restriktionen ,Service Level Agreements, enthält,
- Funktionen, die den Prozessablauf zur Generierung, Verwaltung, Änderung und Löschung von Nutzerumgebungen, gemäß den Spezifikationen des Regelwerkes unterstützen,
- Funktionen zur Überwachung der Einhaltung von Spezifikationen des Regelwerkes, insbesondere zur Überwachung des Zugriffes auf Ressourcen des Netzwerkzugangspunktes CAP,
- Sicherheitsfunktionen, wie Identifizierungsinstanz, Authentifizierung, Autorisierung, Integritätsüberwachung, Verschlüsselung, Fehlererkennung und Fehlerreaktion,
- Verwaltungsfunktionen für Dateisysteme und
- Betriebssystemfunktionen einschließlich Bereitstellung von Schnittstellen für den Zugriff auf Hardwareressourcen des Nertzwerkzuganspunktes CAP.

3. Verfahren nach Anspruch 1 oder 2,
**dadurch gekennzeichnet, dass**
die Grundfunktionen der Basisumgebung nur aus Nutzerumgebungen desselben Netzwerkzugangspunktes (CAP) über verschiedene Zugriffstechnologien und nur über definierte Schnittstellen basierend auf den Spezifikationen des Regelwerkes und nur nach erfolgreicher Überprüfung einer Identifikationsmöglichkeit des zugreifenden Nutzers aufgerufen werden können.

4. Verfahren nach einem der Ansprüche 1 bis 3,
**dadurch gekennzeichnet, dass**
die Grundfunktionen der Basisumgebung konfigurierbar oder fix sind und hardwaretechnisch oder durch eine Kombination aus Soft- und Hardware realisiert werden.

5. Verfahren nach einem der Ansprüche 1 bis 4,
**dadurch gekennzeichnet, dass**
die Nutzungsrechte an Ressourcen eines Netzwerkzugangspunktes (CAP) geteilt werden, wobei eine hardwarebasierte Teilung zumindest ein physikalisch gedoppeltes Hardwaresystem mit einer gemeinsamen Managementkomponente bedingt.

6. Verfahren nach einem der Ansprüche 1 bis 5,
**dadurch gekennzeichnet, dass**
die Nutzungsrechte an Ressourcen eines Netzwerkzugangspunktes (CAP) relativ oder absolut aufgeteilt werden.

7. Verfahren nach einem den Ansprüche 1 bis 6,
**dadurch gekennzeichnet, dass**
eine Partei nur über definierte Schnittstellen und mittels Zugriffstechnologien und nur nach Überprüfung einer zu dieser Nutzerumgebung gehörenden Identifikationsmöglichkeit auf seine Nutzerumgebung zugreifen kann.

8. Verfahren nach einem der Ansprüche 1 bis 7,
**dadurch gekennzeichnet, dass**
der Aushandlungsprozess zustandsgesteuert ist und zumindest die Zustände idle, prepared und ready enthält.

9. Verfahren nach einem der Ansprüche 1 bis 8,
**dadurch gekennzeichnet, dass**
ein Änderungsauftrag eines Nutzers nur dann von dem Netzwerkzugangspunkt (CAP) akzeptiert wird, wenn sich die jeweilige Partei erfolgreich über ihre Identifikationsmöglichkeit authentifiziert hat und für autorisiert erklärt wurde.

10. Verfahren nach einem der Ansprüche 1 bis 9,
**dadurch gekennzeichnet, dass**
ein Änderungsauftrag nutzerspezifische Informationen enthält, der die zu ändernden, die neuen oder die zu löschenden Restriktionen beschreibt.

11. Anordnung mit Mitteln zur Realisierung des Verfahrens nach einem der Ansprüche 1 bis 10, wobei die Anordnung ein Netzwerkzugangspunkt (CAP) umfasst und
die Ressourcen des Netzwerkzugangspunktes (CAP) umfassen:
- mindestens eine drahtlose Netzwerkschnittstelle, die drahtlose Technologien zur Bereitstellung eines drahtlosen Netzwerkes unterstützt,
- mindestens eine drahtgebundene oder drahtlose Netzwerkschnittstelle zur Anbindung über einen Breitbandanschluss an ein weiteres Netzwerk,
- Basishardware, bestehend aus mindestens einer Recheneinheit und mindestens einer Speichereinheit,
- mindestens ein Betriebssystem und
- mindestens ein Dateisystem.

12. Anordnung nach Anspruch 11,
**dadurch gekennzeichnet, dass**
ein CAP mehrere drahtlose Netzwerkschnittstellen, die drahtlose Technologien zur Bereitstellung eines drahtlosen Netzwerkes unterstützen, aufweist und die Netzwerkschnittstellen gleiche oder unterschiedliche Technologien zur Bereitstellung eines drahtlosen Netzwerkes sowie die Möglichkeit eines dynamischen, autonomen Managements der Funkkonfiguration unterstützen.

13. Anordnung nach Anspruch 11 oder 12,
**dadurch gekennzeichnet, dass**
die drahtlose oder drahtgebundene Netzwerkschnittstelle des Netzwerkzugangspunktes (CAP) zur Anbindung über einen Breitbandanschluss an ein weiteres Netzwerk beliebige drahtlose oder drahtgebundene Technologien unterstützt.

14. Anordnung nach einem der Ansprüche 11 bis 13,
**dadurch gekennzeichnet, dass**
die Ressourcen eines Netzwerkzugangspunkts (CAP) in einem einzigen Gerät vereint sind.

15. Anordnung nach einem der Ansprüche 11 bis 13,
**dadurch gekennzeichnet, dass** die Ressourcen eines Netzwerkzugangspunkts (CAP) auf mehrere Geräte verteilt sind, wobei jeweils ein Gerät eine geschlossene Funktionseinheit mit Ressourcen und definierten Schnittstellen bildet.

## Claims

1. A method for implementing an access network based on various topologies for accessing a public network through an infrastructure which is provided by one or plural providers for a joint parallel use by plural parties and which includes at least one network access point (CAP),
wherein the network access point (CAP) includes at least one user environment and one basic environment,
wherein the rights to use resources, the data and data units and the functions of a user of the network access point (CAP) are encapsulated in a user environment and the user environment includes at least one communication module, one safety module and one management module,
wherein the basic functions are encapsulated in the basic environment, wherein the basic functions operate beyond the boundaries of the encapsulated network environment of the network access point (CAP) and the basic environment (5) includes at least one communication module, one safety module and a rule framework, comprising the steps:
dividing the rights to use resources of a network access point (CAP) between plural users with equal rights according to the rule framework to be negotiated, wherein the respective party only uses the resources of the network access point according to the division and without accessing the resources of the other party;
dividing the rights to use resources of the network access point (CAP) only in mutual agreement of all parties whose user environment is affected by the change through a secured negotiation process and wherein the division is only implemented through the basic functions of the basic environment.

2. The method according to claim 1, wherein the basic functions encapsulated in the basic environment of a network access point CAP include:
a rule framework which includes the restrictions, service level agreements, contractually negotiated between the equal users of the network access point (CAP);
functions which support the process sequence for generating, managing, changing and deleting user environments according to the specifications of the rule framework,
functions for monitoring observance of specifications of the rule framework, in particular for monitoring an access to the resources of the network access point (CAP);
safety functions like identification unit, authentication, authorization, integrity monitoring, encryption, error monitoring and error reaction;
management functions for file systems; and
operating system functions, including providing interfaces for access to hardware resources of the network access point (CAP).

3. The method according to claim 1 or 2, wherein the basic functions of the basic environment can only be called up from user environments of the same network access point (CAP) through various access technologies and only through defined interfaces based on the specifications of the rule framework and only after a successful checking of an identification option of the accessing user.

4. The method according to one of the claims 1 through 3, wherein the basic functions of the basic environment are configurable or fixated and are implemented through hardware or through a combination from software and hardware.

5. The method according to one of the claims 1 through 4, wherein the rights to use resources of a network access point (CAP) are divided, wherein a hardware based division causes at least a physically doubled hardware system with a joint management component.

6. The method according to one of the claims 1 through 5, wherein the rights to use resources of a network access point (CAP) are divided in a relative or absolute manner.

7. The method according to one of the claims 1 through 6, wherein a party can only access its user environment through defined interfaces and through access technologies and only after checking an identification option associated with the user environment.

8. The method according to one of the claims 1 through 7, wherein the negotiation process is condition controlled and includes at least the conditions idle, prepared and ready.

9. The method according to one of the claims 1 through 8, wherein a change request of a user is only accepted by the network access point (CAP) when the respective party has successfully authenticated itself through its identification option and was declared authorized.

10. The method according to one of the claims 1 through 9, wherein a change request includes user specific information which describes the new restrictions or the restrictions to be deleted.

11. An arrangement comprising devices for implementing the method according to one of the claims 1 through 10, wherein the arrangement includes a network access point (CAP), and
the resources of the network access point (CAP) include:
at least one wireless network interface which supports wireless technologies for providing a wireless network,
at least one line based or wireless network interface for connecting through a broadband connection to an additional network,
basic hardware including at least one computing unit and at least one storage unit,
at least one operating system, and
at least one file system.

12. The arrangement according to claim 11, wherein a CAP includes plural wireless network interfaces which support wireless technologies for providing a wireless network and the network interfaces support identical or different technologies for providing a wireless network and an option for a dynamic, autonomous management of the radio configuration.

13. The arrangement according to claim 11 or 12, wherein the wireless or line based network interface of the network access point (CAP) for connecting through a broadband connection to another network supports any wireless or line based technologies.

14. The arrangement according to one of the claims 11 or 13, wherein the resources of a network access point (CAP) are united in a single unit.

15. The arrangement according to one of the claims 11 through 13, wherein the resources of a network access point (CAP) are divide between plural units, wherein one respective unit forms a closed functional unit with resources and defined interfaces.

## Revendications

1. Procédé pour mettre en place un réseau d'accès à un réseau public basé sur différentes topologies au moyen d'une infrastructure mise à disposition par un ou plusieurs fournisseurs pour une utilisation commune et parallèle par plusieurs parties à égalité d'accès, laquelle infrastructure est composée d'au moins un point d'accès au réseau (CAP)
**caractérisé en ce que**
- le point d'accès au réseau (CAP) comprend au moins un environnement utilisateur et un environnement de base,
- les droits d'utilisation des ressources, les données, les unités de données ainsi que les fonctions d'un utilisateur de ce point d'accès au réseau (CAP) sont encapsulés dans un environnement utilisateur, et **en ce que** l'environnement utilisateur comprend au moins un module de communication, un module de sécurité et un module de gestion ;
- en outre, les fonctions de base sont encapsulées dans l'environnement de base, lesquelles fonctions de base opèrent au-delà des limites des environnements utilisateurs délimités des points d'accès au réseau (CAP), et l'environnement de base (5) comprend au minimum un module de communication, un module de sécurité, un module de contrôle et un dispositif de régulation comprenant les étapes suivantes :
répartition des droits d'utilisation des ressources d'un point d'accès au réseau (CAP) entre plusieurs utilisateurs jouissant des mêmes droits selon un dispositif de régulation à négocier, l'utilisation des ressources par la partie concernée se limitant au cadre fixé par cette répartition et ladite partie n'ayant pas accès aux ressources de l'autre partie,
répartition des droits d'utilisation des ressources du point d'accès au réseau (CAP) soumise à un accord mutuel entre toutes les parties dont l'environnement utilisateur est affecté par la modification via un processus de négociation sécurisé, ladite répartition étant uniquement mise en oeuvre par le biais de fonctions de base de l'environnement de base.

2. Procédé selon la revendication 1
**caractérisé en ce que**
les fonctions de base encapsulées dans l'environnement de base d'un point d'accès au réseau (CAP) comprennent :
- un dispositif de régulation qui comprend des restrictions ou Service Level Agreements négociées par contrat entre les utilisateurs du point d'accès au réseau (CAP) jouissant des mêmes droits d'utilisation,
- des fonctions qui supportent le déroulement du processus de génération, d'administration, de modification et de suppression des environnements utilisateurs conformément aux spécifications du dispositif de régulation,
- des fonctions pour surveiller le respect des spécifications du dispositif de régulation, en particulier pour surveiller l'accès aux ressources du point d'accès au réseau (CAP),
- des fonctions de sécurité comme une instance d'identification, l'authentification, l'autorisation, la surveillance de l'intégrité, l'encodage, la détection des erreurs et la réaction suite aux erreurs,
- des fonctions de gestion pour les systèmes de fichiers, et
- des fonctions de système d'exploitation incluant la mise à disposition d'interfaces pour l'accès aux ressources matérielles du point d'accès au réseau (CAP).

3. Procédé selon la revendication 1 ou 2
**caractérisé en ce que**
il n'est possible d'accéder aux fonctions de base de l'environnement utilisateur de base qu'à partir des environnements utilisateur d'un même point d'accès au réseau (CAP) par le biais de différentes technologies d'accès et uniquement via des interfaces définies reposant sur les spécifications du dispositif de régulation et après la vérification réussie d'un moyen d'identification de l'utilisateur souhaitant avoir l'accès.

4. Procédé selon l'une quelconque des revendications 1 à 3
**caractérisé en ce que**
les fonctions de base de l'environnement de base sont soit configurables, soit fixes, et sont mises en oeuvre au moyen d'un procédé technique matériel ou d'une combinaison de procédés matériels et logiciels.

5. Procédé selon l'une quelconque des revendications 1 à 4
**caractérisé en ce que**
les droits d'utilisation des ressources d'un point d'accès au réseau (CAP) sont partagés, un partage basé sur l'aspect matériel nécessitant au moins un système matériel doublé physiquement avec un composant de gestion commun.

6. Procédé selon l'une quelconque des revendications 1 à 5
**caractérisé en ce que**
les droits d'utilisation des ressources d'un point d'accès au réseau (CAP) sont partagés de manière relative ou absolue.

7. Procédé selon l'une quelconque des revendications 1 à 6
**caractérisé en ce que**
une partie ne peut accéder à son environnement utilisateur que par le biais d'interfaces définies et au moyen de technologies d'accès, et uniquement après vérification d'un moyen d'identification appartenant à cet environnement utilisateur.

8. Procédé selon l'une quelconque des revendications 1 à 7
**caractérisé en ce que**
le processus de négociation est contrôlé par l'état et qu'il existe, au minimum, les états idle, prepared et ready.

9. Procédé selon l'une quelconque des revendications 1 à 8
**caractérisé en ce que**
un ordre de modification adressé par un utilisateur n'est accepté par le point d'accès au réseau (CAP) qu'après l'authentification réussie de la partie concernée par le biais de son moyen d'identification et qu'après son autorisation déclarée.

10. Procédé selon l'une quelconque des revendications 1 à 9
**caractérisé en ce que**
un ordre de modification comporte des informations spécifiques à l'utilisateur qui décrivent les restrictions à modifier, les nouvelles restrictions ou les restrictions à supprimer.

11. Système de point d'accès au réseau pour réaliser le procédé décrit par l'une quelconque des revendications 1 à 10, le système comprenant un point d'accès au réseau (CAP) et les ressources du point d'accès au réseau (CAP) comprenant :
- au moins une interface réseau sans fil qui supporte des technologies sans fil pour l'accès à un réseau sans fil,
- au moins une interface réseau filaire ou sans fil pour la connexion à un autre réseau via un accès à bande large,
- du matériel de base comprenant au moins un processeur et au moins une unité de stockage,
- au moins un système d'exploitation, et
- au moins un système de fichiers.

12. Système selon la revendication 11
**caractérisé en ce que**
un CAP présente plusieurs interfaces réseau sans fil qui supportent les technologies sans fil pour l'accès à un réseau sans fil, et **en ce que** les interfaces réseau supportent des technologies identiques ou différentes pour l'accès à un réseau sans fil ainsi que la possibilité d'une gestion dynamique et autonome de la configuration de la transmission.

13. Système selon la revendication 11 ou 12
**caractérisé en ce que**
l'interface réseau filaire ou sans fil du point d'accès au réseau (CAP) supporte des technologies sans fil ou filaires quelconques pour la connexion à un autre réseau via un accès à bande large.

14. Système selon l'une quelconque des revendications 11 à 13
**caractérisé en ce que**
les ressources d'un point d'accès au réseau (CAP) sont regroupées dans un seul et même appareil.

15. Système selon l'une quelconque des revendications 11 à 13
**caractérisé en ce que**
les ressources d'un point d'accès au réseau (CAP) sont réparties sur plusieurs appareils, chaque appareil formant une unité de fonction fermée avec des ressources et des interfaces définies.
